(19) Europäisches Patentamt
European Patent Office
Office européen des brevets

(11) Publication number: **0 536 569 A2**

# (12) EUROPEAN PATENT APPLICATION

(21) Application number: **92115826.7**

(22) Date of filing: **16.09.92**

(51) Int. Cl.$^5$: **H02P 7/63**, H02M 7/527, B60L 9/16

(30) Priority: **18.09.91 JP 237796/91**

(43) Date of publication of application:
**14.04.93 Bulletin 93/15**

(84) Designated Contracting States:
**DE FR**

(71) Applicant: **HITACHI, LTD.**
**6, Kanda Surugadai 4-chome**
**Chiyoda-ku, Tokyo 100(JP)**
Applicant: **Hitachi Techno Engineering Co., Ltd.**
**3, Kanda-Surugadai 4-chome**
**Chiyoda-ku Tokyo(JP)**
Applicant: **HITACHI MITO ENGINEERING CO., LTD.**
**Hitachi Systemplaza Katsuta Bldg. 832-2, Horiguchi**
**Katsuta-shi, Ibaraki-ken(JP)**

(72) Inventor: **Matsui, Takayuki**
**18-5, Daiharacho-3-chome**
**Hitachi-shi(JP)**
Inventor: **Horie, Akira**
**2915-16, Mawatari**
**Katsuta-shi(JP)**
Inventor: **Saito, Shuji**
**2153-43, Tsuda**
**Katsuta-shi(JP)**
Inventor: **Toyota, Eiichi**
**1432-5, Tabiko**
**Katsuta-shi(JP)**
Inventor: **Sakata, Kazuhiro**
**1381-18, Tabiko**
**Katsuta-shi(JP)**
Inventor: **Ando, Takeshi**
**Iguru Aoba 310, 10-1, Aobacho**
**Katsuta-shi(JP)**
Inventor: **Tsuboi, Takashi**
**897-13, Ichige**
**Katsuta-shi(JP)**
Inventor: **Kawakami, Tetsuya**
**Daiichi, Yuwaryo B314, 21-1, Ishikawacho**
**Katsuta-shi(JP)**
Inventor: **Takaku, Toshihiko**
**Vera Etowaru C-103, 678, Koya**
**Katsuta-shi(JP)**

(74) Representative: **Patentanwälte Beetz - Timpe - Siegfried - Schmitt-Fumian- Mayr**
**Steinsdorfstrasse 10**
**W-8000 München 22 (DE)**

## (54) AC motor control apparatus and control apparatus of electric rolling stock using the same.

(57) There is provided a control apparatus of an AC motor (2) capable of performing stable torque control even over the entire running region of the AC motor. Structurally, a feedback control system (9, 8) for controlling the magnitude of motor primary current, a feedback control system (8, 17) for controlling the exciting component of motor primary current and a feedback control system (8, 18) for controlling the torque component of motor primary current are provided. Torque control is effected by a vector control system (4, 5, 6, 7, 8, 9) in the low speed running region and torque control is effected by a slip frequency control system (16, 10, 19, 20, 21, 22, 23) in the high speed running region, so that torque can be controlled excellently over the entire running region.

EP 0 536 569 A2

F I G. 1

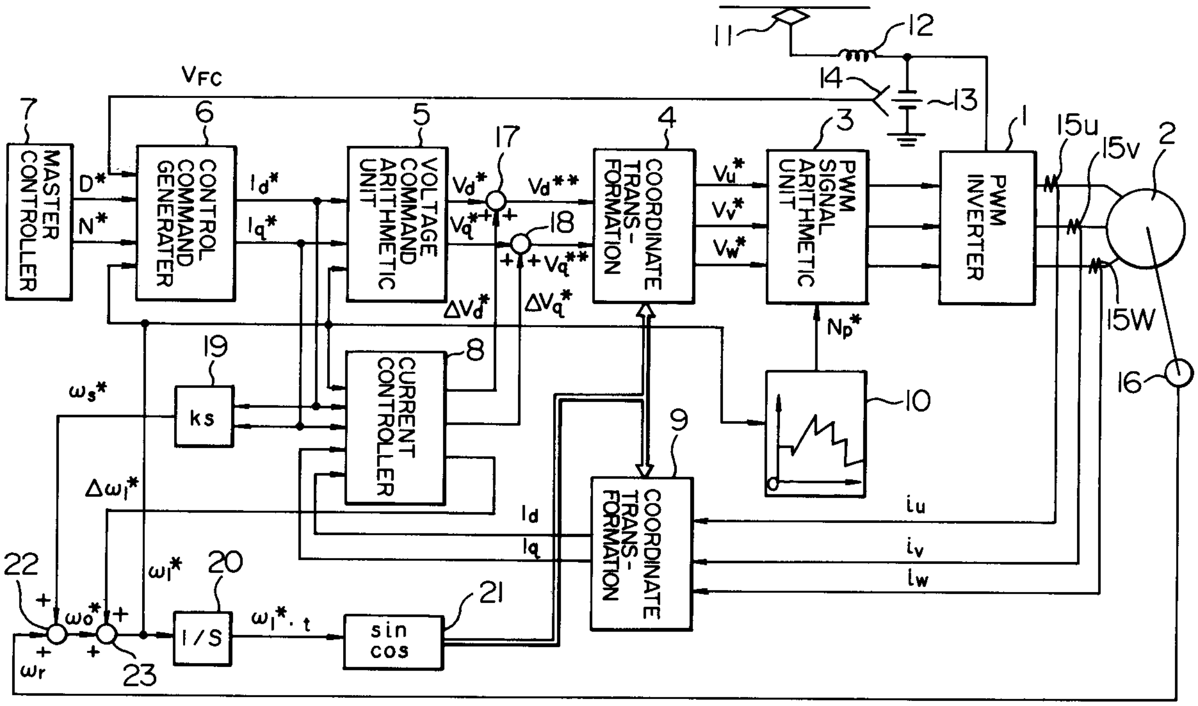
MASTER CONTROLLER
CONTROL COMMAND GENERATER
VOLTAGE COMMAND ARITHMETIC UNIT
COORDINATE TRANS-FORMATION
PWM SIGNAL ARITHMETIC UNIT
PWM INVERTER
CURRENT CONTROLLER
COORDINATE TRANS-FORMATION
ks
1/S
sin cos
VFC
D*
N*
Id*
Iq*
Vd*
Vq*
Vd**
Vq**
ΔVd*
ΔVq*
Vu*
Vv*
Vw*
Np*
ωs*
Δω1*
ω1*
ωo*
ω1*· t
ωr
Id
Iq
iu
iv
iw
1
2
3
4
5
6
7
8
9
10
11
12
13
14
15u
15v
15W
16
17
18
19
20
21
22
23

## BACKGROUND OF THE INVENTION

The present invention relates to an AC motor control apparatus capable of performing excellent torque control.

In recent years, employment of an induction motor, which is controllable in variable voltage and variable frequency fashion by an inverter, as a motor for driving an electric vehicle has been gaining a widespread use in the field of railway vehicles.

Incidentally, when controlling rotation speed of the induction motor standing for an AC motor, a slip frequency control type PWM inverter unit is used with the aim of improving the voltage utilization rate of power supply, as described in, for example, JP-A-62-163589.

A technique for vector control of an induction motor for the sake of improving responsibility of torque control of an electric rolling stock driving motor, though not involved in the field of railway vehicle, is described in JP-A-2-266884.

## SUMMARY OF THE INVENTION

As described in the former prior art, in the railway electric rolling stock, parameters for performing torque control of the motor are output voltage value and slip frequency with respect to inverter frequency and fluctuation of magnetic flux of the motor is not taken into consideration. As a result, a fluctuation of magnetic flux leads to a torque fluctuation, giving rise to occurrence of slip and the like. Especially, in the case of railway electric rolling stock, running at the adhesive limit is the most efficient and therefore torque fluctuation must be suppressed to as small a value as possible.

Thus, vector control capable of controlling magnetic flux inside the motor and current independently of each other is introduced into an AC motor control apparatus of railway electric rolling stock.

When the AC motor is vector controlled, responsibility of torque control is raised as described in the latter prior art.

However, mere application of the vector control as it is to the electric rolling stock control apparatus faces problems as below.

In typical vector control, the motor frequency is used upon decomposition of current into vector components. However, the number of pulses generated by a speed detector (encoder) mounted to a body such as an electric rolling stock having large exciting force upon acceleration is small.

Especially in the low speed region, therefore, a delay in speed detection occurs and it links directly to torque fluctuation.

In the electric rolling stock which requires the resolution of a single pulse of the encoder to improve voltage utilization rate it is difficult to control the motor with the vector control method in such a single pulse region.

In addition to the electric rolling stock exemplified herein, there are similar problems in the other systems driving an AC motor by using vector control method.

An object of the present invention is to provide a control apparatus of AC motor which can perform excellent torque control upon vector control of the AC motor.

To accomplish the above object, in a control apparatus of an AC motor driven by a power converter for delivering alternating current of variable voltage and variable frequency, there are provided means for controlling a vector of motor primary current and slip frequency control means for controlling a slip frequency of the motor, and both the control means are used in combination.

The slip frequency control system controls the slip frequency of the motor in accordance with a difference in the motor primary current. Since very small delay occurs in detection of the motor current, an error due to vector control can be absorbed.

Since the slip frequency control system based on the difference in the primary current comes into power in the region in which voltage control is invalidated, the motor can be controlled even in the vector control disabled region. Prior to describing embodiments of the present invention, a brief description will be given of the invention.

Principally considered as factors hindering smooth torque control of the motor are:

firstly, change of primary resistance of the AC motor and change of inductance due to magnetic saturation of the core,

secondly, change of inverter DC power supply voltage,

thirdly, change of output voltage due to PWM pulse mode change of the inverter,

fourthly, setting error of slip angular frequency command due to change of secondary resistance of the AC motor, and

fifthly, speed detection error of the AC motor. The present invention takes advantage of the fact that the magnitude, exciting current component and torque current component of the motor primary current are inherently different in sensitivity to the factors of disturbance of torque control and so has current control systems capable of controlling the respective current components independently of each other to thereby suppress torque fluctuation.

More particularly, in view of the aforementioned first to third disturbance factors, current control systems, independent of each other, are provided for the exciting current component of the motor primary current and the torque current component thereof, respectively, and they are used to control individual voltage components of the rotating magnetic field coordinate system of the motor, thereby ensuring that torque fluctuation can be suppressed with respect to the disturbance.

Further, in view of the aforementioned fourth and fifth disturbance factors, a closed loop control system for the magnitude of primary current is set up which has the highest sensitivity to a region starting from the low speed region and ending in the high speed region (starting from the multipulse mode and ending in one pulse mode) and it is used to control the primary angular frequency (inverter frequency).

In other words, according to the invention, slip frequency control means for controlling the slip frequency of the motor and means for controlling respectively magnetic flux of the motor and current orthogonal thereto are controlled independently of each other so as not to interfere with each other. For example, the primary current is decomposed into an exciting component and a torque component which are controlled independently of each other or vector control means for controlling the magnitude and phase of the primary current is used in combination, thereby permitting excellent torque control over the entire operation region.

Especially, since in an AC motor control PWM inverter for driving a railway electric rolling stock, the use of PWM pulse is extended to even the mode of one pulse, voltage is fixed to power supply voltage and voltage control is invalidated. Even in such an event, the first to third disturbance factors compensated for by voltage control can be detected as a disturbance in the motor primary current and the primary angular frequency can be controlled to prevent over current to thereby keep stable running continuing.

Even in an application other than the electric rolling stock, the present invention has the function to prevent torque fluctuation due to at least the aforementioned fourth disturbance.

More particularly, for example, the control region of a control apparatus of an AC motor used for a rolling mill or the like is a variable voltage and variable frequency region and even in a use in such a region alone, a setting error of slip angular frequency command due to a change of the secondary resistance of the AC motor takes place. By correcting the slip angular frequency error on the basis of magnitude of the primary current, response of the vector current control system can be improved and as a result the setting error can be eliminated.

Incidentally, the previously-described JP-A-2-266884 gives a description that a vector control system switches to a slip frequency control system only when current detectors become faulty but does not teach a use of both the control systems in combination.

## BRIEF DESCRIPTION OF THE DRAWINGS

Fig. 1 is a block diagram showing an embodiment of an AC motor control apparatus according to the invention;

Fig. 2 is a graph showing examples of patterns stored in a control command generator 6;

Fig. 3 is a block diagram showing details of construction of a voltage command arithmetic unit 5;

Fig. 4 is a block diagram showing details of construction of a current controller 8;

Fig. 5 is a vector diagram for explaining voltage and current components of the rotating magnetic field coordinate system;

Fig. 6 is a vector diagram for explaining magnetic flux ($\phi_{2q}$) which develops when magnetic flux axis (m) of the motor does not coincide with coordinate axis (d) of control;

Fig. 7 is a graph showing the change of d-axis current with respect to the change of motor constants;

Fig. 8 is a graph showing the change of q-axis current with respect to the change of motor constants;

Fig. 9 is a graph showing primary current $\Delta I_1$ and magnetic flux $\phi_{2q}$ with respect to the change of motor constant $r_1$ ;

Fig. 10 is a graph showing primary current $\Delta I_1$ and magnetic flux $\phi_{2q}$ with respect to the change of slip;

Fig. 11 is a graph showing torque $\tau$ with respect to the change of motor constants;

Fig. 12 is a graph showing the slip angular frequency with respect to the primary angular frequency;

Fig. 13 is a graph showing the relation of carrier frequency with respect to the primary angular frequency;

Fig. 14 is a fragmentary schematic block diagram showing a second embodiment of the AC motor control apparatus according to the invention;

Fig. 15 is a fragmentary schematic block diagram showing a third embodiment of the AC motor control apparatus according to the invention;

Fig. 16 is a fragmentary schematic block diagram showing a fourth embodiment of the AC motor control apparatus according to the invention;

Fig. 17 is a block diagram showing a fifth embodiment of the AC motor control apparatus according to the invention;

Fig. 18 is a block diagram showing details of construction of a coordinate transformation in the Fig. 17 embodiment;

Fig. 19 is a block diagram showing a sixth embodiment of the AC motor control apparatus according to the invention;

Fig. 20 is a block diagram showing details of a switching unit;

Fig. 21 is a block diagram showing another embodiment of the current controller 8;

Fig. 22 is a graph showing primary current $\Delta I_1$ and magnetic flux $\phi_{2q}$ with respect to the change of motor constant $L_s\sigma^*$; and

Fig. 23 is a block diagram showing another embodiment of the current controller 8.

DESCRIPTION OF THE PREFERRED EMBODIMENTS

An embodiment of the present invention will now be described with reference to Figs. 1 to 11.

In Fig. 1, direct current fed from a stringing via a pantograph 11 is smoothed by a filter circuit comprised of a filter reactor 12 and a filter capacitor 13 and supplied to a pulse width modulation (hereinafter referred to as PWM) inverter 1 serving as a power converter. The inverter 1 converts DC voltage into three-phase AC voltage which is fed to an induction motor 2 standing for an AC motor to drive the same. An electric rolling stock runs with the induction motor 2 used as a drive source.

A forward/backward command signal D* and a power running/brake command signal N* which are delivered out of a master controller 7 are inputted to a control command generator 6.

On the basis of a filter capacitor voltage signal $V_{FC}$, a primary angular frequency command signal $\omega_1^*$, the power running/brake command signal N* and the forward/backward command signal D*, the control command generator 6 generates an exciting current command signal $I_d^*$ and a torque current command signal $I_q^*$ for the induction motor 2 which in turn are delivered to a voltage command arithmetic unit 5, a current controller 8 and a slip angular frequency arithmetic unit 19.

On the basis of the exciting current command signal $I_d^*$, torque current command signal $I_q^*$ and primary angular frequency command signal $\omega_1^*$, the voltage command arithmetic unit 5 calculates $V_d^*$ and $V_q^*$ which are commands of two voltage components of a rotating magnetic field coordinate system and which are fed to the induction motor 2 and delivers them to adders 17 and 18.

In the adders 17 and 18, the two voltage component commands $V_d^*$ and $V_q^*$ are added with two voltage component correction commands $\Delta V_d^*$ and $\Delta V_q^*$, respectively, to obtain $V_d^{**}$ and $V_q^{**}$ which in turn are delivered to a coordinate transformation 4. On the basis of coordinate transformation reference command signals, the coordinate transformation 4 converts the $V_d^{**}$ and $V_q^{**}$ into output voltage command signals $v_u^*$, $v_v^*$ and $v_w^*$ of a stator coordinate system which in turn are delivered to a PWM signal arithmetic unit 3.

In the PWM signal arithmetic unit 3, the output voltage commands $v_u^*$, $v_v^*$ and $v_w^*$ are compared with a carrier which is determined in accordance with the output of a pulse mode generator 10 to obtain on/off pulses which in turn are supplied to the PWM inverter 1.

A coordinate transformation 9 receives inverter output currents $i_u$, $i_v$ and $i_w$ detected by current detectors 15u, 15v and 15w adapted to detect output current of the PWM inverter 1 and on the basis of the coordinate transformation reference signals, converts them into current components $I_d$ and $I_q$ of the rotating magnetic field coordinate system which in turn are delivered to the current controller 8.

On the other hand, an induction motor speed $\omega_r$ detected by a speed detector 16 is added to a slip angular frequency command signal $\omega_s^*$ standing for the output of the slip angular frequency arithmetic unit 19 by means of an adder 22 to provide a primary angular frequency command $\omega_0^*$ which is delivered to an adder 23.

In the adder 23, this primary angular frequency command signal $\omega_0^*$ is added with a correction angular frequency command signal $\Delta\omega_1^*$ standing for the output of the current controller 8 to produce the primary angular frequency command signal $\omega_1^*$.

The primary angular frequency command signal $\omega_1^*$ is supplied to an integrator 20, the control command generator 6, voltage command arithmetic unit 5, current controller 8 and pulse mode generator 10.

The integrator 20 calculates a coordinate reference signal $\omega_1$* from the primary angular frequency command signal $\omega_1$* and delivers it to a sine and cosine generator 21.

The sine and cosine generator 21 generates coordinate transformation reference signals sin $\omega$*t and cos $\omega$*t, which are delivered to the previously described coordinate transformation 4 and 9.

Further, on the basis of the exciting current command signal $I_d$*, torque current command signal $I_q$*, exciting current $I_d$, torque current $I_q$ and primary angular frequency command signal $\omega_1$*, the current controller 8 calculates two correction voltage component commands $\Delta V_d$* and $\Delta V_q$* and primary angular frequency correction signal $\Delta\omega_1$* which are respectively delivered to the adders 17, 18 and 23 as described previously.

Responsive to the primary angular frequency command signal $\omega_1$*, the pulse mode generator 10 generates a PWM pulse number command $N_p$* which is delivered to the PWM pulse arithmetic unit 3.

With the control construction of Fig. 1 described as above, DC voltage of the PWM inverter 1 can be utilized most efficiently.

More particularly, in the low speed running region in which voltage control of the PWM inverter 1 can be effected highly accurately, it is possible to make the best of a two-current feedback system of vector control system (system for correcting voltage commands $V_d$* and $V_q$* determined from current commands, in accordance with a difference between exciting component of motor primary current and its command value and a difference between torque component of motor primary current and its command) and a feedback control system (slip frequency control) for controlling the inverter output frequency (primary angular frequency) in accordance with a difference between the magnitude of primary current (scalar quantity) and its command value.

Further, in the region in which primary current ripple increases owing to, for example, a decrease in pulse number complying with an increase in primary angular frequency, the gain of the two-current feedback control system of vector control system is reduced.

In the region in which the pulse number measures one pulse, the two-current feedback control system of vector control system is invalidated completely. However, since the voltage commands $V_d$* and $V_q$* take values calculated from the current command values $I_d$* and $I_q$* (these $I_d$* and $I_q$* change with the primary angular frequency as will be described later), vector control continues to proceed. As a result, only the phase relation is commanded but in contrast to the simple slip frequency control system, the command can fulfill itself even in the absence of the primary current control system, thus relieving load on the current control system.

Accordingly, a torque control system which can afford to provide high accuracies preserved even in the extreme one pulse mode can be constructed.

Details of individual components will now be described.

Fig. 2 shows examples of patterns stored in the control command generator 6.

The exciting current command signal $I_d$* and torque current command signal $I_q$* are changed with respect to the filter capacitor voltage $V_{FC}$ and primary angular frequency command $\omega_1$* so as to obtain accelerating performance of the rolling stock.

More specifically, the control command generator 6 receives a power running/braking force command N* calculated by the master controller 7 on the basis of a preset accelerating/decelerating acceleration command $\alpha$* and a weight value which depends on the body of vehicle and the number of riders.

Then, in a range within which voltage fed to the induction motor 2 is smaller than a maximum value of output voltage of inverter 1 which is determined by a filter capacitor voltage $V_{FC}$, the exciting current command signal is made to take a constant value so as to keep magnitude $\phi$* of magnetic flux of the induction motor 2 at a predetermined value.

As voltage fed to the induction motor 2 reaches the maximum value of inverter output voltage determined by the filter capacitor voltage $V_{FC}$ (one pulse mode), the exciting current command signal $I_d$* is made to be in inverse proportion to the primary angular frequency command signal $\omega_1$*. Through this, the voltage command can be maintained at a maximum value.

A torque current command signal $I_q$* of the induction motor 2 is obtained by multiplying a ratio between power running/braking force command N* and magnitude $\phi$* of magnetic flux by a forward/backward command signal D* (+1 for forward running and -1 for backward running).

In addition, with respect to the primary angular frequency command $\omega_1$*, the exciting current command signal $I_d$* and torque current command signal $I_q$* are so limited that the maximum rated output of the inverter 1 or induction motor 2 is not exceeded.

The thus determined exciting current command signal $I_d$* torque current command $I_q$* and primary angular frequency command $\omega_1$* are inputted to the voltage command arithmetic unit 5 for calculating a voltage command fed to the induction motor 2. Detailed construction of the voltage command arithmetic unit 5 is shown in Fig. 3.

A coefficient multiplier 500 multiplies the exciting current command signal $I_d^*$ by a primary resistance $r_1$ to provide a product which is delivered to an adder 501.

A coefficient multiplier 502 multiplies the torque current command signal $I_d^*$ by a leakage inductance $L_{s\sigma}$ to provide a product delivered to a multiplier 505.

A coefficient multiplier 504 multiplies the exciting current command signal $I_d^*$ by a primary inductance $L_1$ to provide a product delivered to a multiplier 505.

A coefficient multiplier 506 multiplies the torque current command signal $I_q^*$ by the primary resistance $r_1$ to provide a product delivered to an adder 507.

The multiplier 503 multiplies an output signal of the coefficient multiplier 502 by the primary angular frequency $\omega_1^*$ to provide a product delivered to the adder 501 and from this value and the output of the coefficient multiplier 500, the adder 501 calculates a voltage component $V_d^*$ of the rotating magnetic field coordinate system.

The multiplier 505 multiplies the output of the coefficient multiplier 504 by the primary angular frequency $\omega_1^*$ to provide a product delivered to the adder 507 and from this value and the output of the coefficient multiplier 506, the adder 507 calculates a voltage component $V_q^*$ of the rotating magnetic field coordinate system.

A voltage equation of the rotating magnetic field coordinate system under the stationary state of AC motor 2 is expressed by the following equations:

$$I_d = \frac{1}{r_1 + L_{s\sigma} \cdot S} \{V_d + \omega_1 \cdot L_{s\sigma} \cdot I_q\} \quad \ldots (1)$$

$$I_q = \frac{1}{r_1 + L_{s\sigma} \cdot S} \{V_q - \omega_1 \cdot L_1 \cdot I_d\} \quad \ldots (2)$$

where S represents Laplace operator.

On the other hand, since the voltage command arithmetic unit 5 is constructed as shown in Fig. 3, there result the following equations by substituting $V_d = Vd^*$ and $V_q = V_q^*$ into equations (1) and (2):

$$I_d = \frac{1}{r_1 + L_{s\sigma} \cdot S} \{r_1 \cdot I_d^*\} \quad \ldots (3)$$

$$I_q = \frac{1}{r_1 + L_{s\sigma} \cdot S} \{r_1 \cdot I_q^*\} \quad \ldots (4)$$

Equations (3) and (4) indicate that $I_d = I_d^*$ and $I_q = I_q^*$ stand under the stationary state. To this end, it is necessary that constants of the coefficient multipliers 500, 502, 504 and 506 coincide with constants of the induction motor 2. However, winding temperature change and core magnetic saturation in the motor make it difficult to achieve the coincidence. Thus, in the present embodiment, the current controller 8 is provided to achieve the coincidence with motor constants.

Detailed construction of the current controller 8 is shown in Fig. 4.

Motor primary currents $i_u$ to $i_w$ detected by the current detectors $15_u$ to $15_w$ are converted by the coordinate transformation 9 into two phases representative of exciting current $I_d$ and torque current $I_q$. An operation equation is given by equation (5),

$$\begin{bmatrix} I_d \\ I_q \end{bmatrix} = \begin{bmatrix} \cos\omega_1{*}t & \sin\omega_1{*}t \\ -\sin\omega_1{*}t & \cos\omega_1{*}t \end{bmatrix} \begin{bmatrix} 2/3 & -1/3 & -1/3 \\ 0 & 1/\sqrt{3} & -1/\sqrt{3} \end{bmatrix} \begin{bmatrix} i_u \\ i_v \\ i_w \end{bmatrix} \quad \ldots (5)$$

where the primary angular frequency command $\omega_1{}^*$ defines values of sine and cosine.

Exciting current command signal $I_d{}^*$ is inputted to an adder 801 and an arithmetic unit 807. Torque current command signal $I_q{}^*$ is inputted to an adder 804 and the arithmetic unit 807. Exciting current $I_d$ is inputted to the adder 801 and an arithmetic unit 810. Torque current $I_q$ is inputted the adder 804 and arithmetic unit 810.

The adder 801 calculates a difference between the exciting current command signal $I_q{}^*$ and a detected exciting current $I_d$ and delivers the difference to a controller 803 via a multiplier 802.

The adder 804 calculates a difference between the torque current command signal $I_q{}^*$ and a detected torque current $I_q$ and delivers the difference to an controller 806 via a multiplier 805.

The arithmetic units 807 and 810 respectively carry out operations expressed by the following equations (6) and (7), and an adder 808 calculates a difference between command signal $I_1{}^*$ for the magnitude of output current of the inverter and a detection signal $I_1$ and delivers a result to a controller 809.

$$I_1{}^* = \sqrt{(I_d{}^*)^2 + (I_q{}^*)^2} \quad (6)$$

$$I_1 = \sqrt{(I_d)^2 + (I_q)^2} \quad (7)$$

The controllers 803, 806 and 809 are each constructed of a proportional integration (P-I) arithmetic unit and the controllers 803 and 806 respectively deliver voltage command correction signals $\Delta V_d{}^*$ and $\Delta V_q{}^*$ for correcting the output voltage commands $V_d{}^*$ and $V_q{}^*$.

$$\Delta V_d{}^* = \left( P_d + \frac{K_d}{S} \right) (I_d{}^* - I_d) \quad \ldots (8)$$

$$\Delta V_q{}^* = \left( P_q + \frac{K_q}{S} \right) (I_q{}^* - I_q) \quad \ldots (9).$$

The controller 809 delivers a frequency command correction signal $\Delta\omega^*$ for correcting the primary angular frequency command $\omega_1{}^*$:

$$\Delta\omega_1{}^* = \left( P_1 + \frac{K_1}{S} \right) (I_1{}^* - I_1) \quad \ldots (10).$$

Incidentally, in the region in which the pulse number of PWM pulses of the PWM inverter 1 measures one, voltage control based on the exciting current and torque current is not permitted. As a result, the current difference is accumulated in integrators included in the controllers 803 and 806 and the correction values $\Delta V_d{}^*$and $\Delta V_q{}^*$ are saturated.

Then, by taking advantage of the fact that the pulse number of PWM pulses can be controlled in accordance with the primary angular frequency command $\omega_1{}^*$ (a factor of power supply voltage must be added when the pulse mode switching frequency changes with power supply voltage), the output of a function generator 800 is used to make zero the input to each of the controllers 803 and 806, thus stopping them from operating. When nullification of the current difference by the action of the controllers 803 and 806 is prevented, the current difference develops in the adder 808, so that the primary angular frequency command $\omega_1{}^*$ is controlled by the controller 809 such that magnitude $I_1$ of the output current of inverter 1 is so controlled as to coincide with a command value $I_1{}^*$.

Under this condition, the vector control system controls input voltage vector to the motor, without resort to the correction loop.

In the current controller of the present embodiment, the magnitude of primary current is determined from the square root of the sum of the square of exciting component of primary current and the square of torque component of primary current but the primary current may also be determined directly from values of the current detectors 15u to 15w.

The operation of the controllers 803, 806 and 809 will now be described.

Fig. 5 is a vector diagram showing voltage components $V_d$ and $V_q$ and current components $I_d$ and $I_q$ of the rotating magnetic field coordinate system in the case where suitable primary angular frequency $\omega_1$ and terminal voltage are fed to the AC motor 2.

When the primary angular frequency $\omega_1$ and voltage components $V_d$ and $V_q$ are controlled such that d-axis standing for the coordinate reference of the control system coincides with magnetic flux vector $\phi$ of the induction motor 2, torque of the induction motor 2 is generated in proportion to q-axis current $I_q$ and magnetic flux $\phi_{2d}$ to permit high-response torque control.

This state corresponds to ideal vector control.

However, as running of the induction motor 2 proceeds, not only temperature rises to cause primary resistance $r_1$ and secondary resistance $r_2$ to change but also magnetic saturation in the core causes leakage inductance to change. Therefore proper commanding of the primary angular frequency $\omega_1$ and voltage components $V_d$ and $V_q$ is difficult to achieve.

More specifically, when a large value of command $r_1{}^*$ in the control system is given to the primary resistance $r_1$ of the AC motor 2, output voltage vector $v_1$ lags in phase relative to vector v of Fig. 5 as shown in Fig. 6 and increases in magnitude. Accordingly, because of $v_1$, magnetic flux vector $\phi$ of the AC motor 2 assumes d-axis component $\phi_{2d}$ and q-axis component $\phi_{2q}$, resulting in non-coincidence of d-axis of the control system with magnetic flux vector $\phi$ (m-axis). Under this condition, torque is generated in proportion to the product of $I_q$ and $\phi_{2d}$ and the product of $I_d$ and $\phi_{2q}$, with the result that d-axis interferes with q-axis to prevent high-response torque control.

Therefore, in the present embodiment, a current control system is provided which corrects the respective primary angular frequency $\omega_1$ and voltage components $V_d$ and $V_q$ of the rotating magnetic field system on the basis of inverter output currents.

Fig. 7 shows change $\Delta I_d$ of d-axis current with respect to changes of motor constants $r_1{}^*$ and $L_s\sigma^*$.

In the figure, solid line represents $\Delta I_d$ with respect to change of primary resistance $r_1$ and dotted line represents $\Delta I_d$ with respect to change of leakage inductance $L_s\sigma^*$, the $\Delta I_d$ having the magnitude which is normalized by the rated current. When $\Delta I_d$ increases, the controller 803 calculates a voltage command $\Delta V_d{}^*$ (< 0) for decreasing d-axis voltage so that d-axis voltage command may be corrected to control $\Delta I_d$ such that it becomes zero.

Fig. 8 shows change $\Delta I_q$ of d-axis current with respect to changes of motor constants $r_1{}^*$ and $L_s\sigma^*$.

In the figure, solid line represents $\Delta I_q$ with respect to change of primary resistance $r_1{}^*$ and dotted line represents $\Delta I_q$ with respect to change of leakage inductance $L_s\sigma^*$, the $\Delta I_q$ having the magnitude which is normalized by the rated current. When $\Delta I_q$ increases, the controller 806 calculates a voltage command $\Delta V_q{}^*$ (< 0) for decreasing q-axis voltage so that q-axis voltage command may be corrected to control $\Delta I_q$ such that it becomes zero.

In the manner described as above, the controllers 803 and 806 so operate as to make zero the change of current due to the changes of motor constants but as shown in the Fig. 6 vector diagram, supply of proper voltage to the motor is prevented by the changes of motor constants to cause non-coincidence of d-axis of the control system with magnetic flux (m-axis) of the motor, so that the controller 803 for d-axis and the controller 806 for q-axis are not allowed to operate independently of each other but they sometimes interfere with each other to cause current to oscillate.

Accordingly, in the present embodiment, the controller 809 is provided which corrects the primary angular frequency $\omega_1$ such that d-axis of the control system coincides with magnetic flux (m-axis) of the motor.

Fig. 9 shows change $\Delta I_1$ in magnitude of the primary current with respect to change of motor constant $r_1^*$ and q-axis magnetic flux $\phi_{2q}$ of the motor. In the figure, solid line represents change $\Delta I_1$ of the primary current which is normalized in magnitude by the magnitude of the rated current and chained line represents q-axis magnetic flux $\phi_{2q}$ which is normalized in magnitude by the magnitude of the rated magnetic flux.

As value $r_1^*$ of the primary resistance set by the control system increases, $\Delta I_1$ increases in positive sense and q-axis magnetic flux $\phi_{2q}$ decreases in negative sense.

Accordingly, when $\Delta I_1$ increases in positive sense, the controller 809 calculates angular frequency command $\Delta\omega_1^*$ for decreasing the primary angular frequency so that the primary angular frequency command may be corrected to control $\phi_{2q}$ such that it becomes zero. With $\phi_{2q}$ rendered to be zero, $\Delta I_1$ is also rendered to be zero.

Fig. 10 shows magnitude $\Delta I_1$ of the primary current with respect to change of motor constant $r_2^*$, i.e., change of slip angular frequency command $\omega_s^*$ and q-axis magnetic flux $\phi_{2q}$ of the motor. In the figure, solid line represents change $\Delta I_1$ of the primary current which is normalized in magnitude by the magnitude of the rated current and chained line represents q-axis magnetic flux $\phi_{2q}$ which is normalized in magnitude by the magnitude of the rated magnetic flux. As slip angular frequency command $\omega_s^*$ in the control system increases, $\Delta I_1$ increases in positive sense and q-axis magnetic flux $\phi_{2q}$ decreases in negative sense.

Accordingly, when $\Delta I_1$ increases in positive sense, the controller 809 calculates angular frequency command $\Delta\omega_1^*$ for decreasing the primary angular frequency as in the case of $r_1^*$ shown in Fig. 9 so that the primary angular frequency command may be corrected to control $\phi_{2q}$ such that it becomes zero.

In this manner, the change of current with respect to the changes of motor constants and the non-coincidence of d-axis with magnetic flux (m-axis) of the motor can be prevented to permit d-axis current control and q-axis current control to be effected independently of each other.

In the running range in which the PWM pulse number measures one pulse, control of the magnitude of output voltage of the inverter is not permitted but even in this range, phase angle $\theta_v^*$ of output voltage determined by voltage component commands $V_d^{**}$ and $V_q^{**}$ can act on the inverter output voltage effectively. As a result, the non-coincidence of d-axis of the control system with magnetic flux (m-axis)of the AC motor can be prevented.

Fig. 11 shows torque $\tau$ with respect to changes of motor constants. In the figure, solid line represents torque with respect to change of slip angular frequency $\omega_s^*$, chained line represents torque with respect to change of primary resistance $r_1^*$, and dotted line represents torque with respect to change of leakage inductance $L_s\sigma$, the torque being normalized in magnitude by the magnitude of the rated torque. As motor constants $\omega_s^*$, $r_1^*$ and $L_s\sigma^*$ increase, torque $\tau$ increases in proportion thereto. At that time, q-axis magnetic flux $\phi_{2q}$ of the motor deviates from zero as shown in Figs. 9, 10 and 22 and the non-coincidence of d-axis of the control system with magnetic flux (m-axis) of-the AC motor, thus preventing torque and magnetic flux from being controlled independently of each other. In the present invention,control is effected such that the q-axis magnetic flux $\phi_{2q}$ is rendered to be zero to prevent torque from becoming excessively large or excessively small.

As a result, the interference of magnetic flux of the motor with torque current $I_q$ can be suppressed to permit high-response torque control.

In the present embodiment, the-controller 809 is operated in accordance with change $\Delta I_1$ in magnitude of the primary current but instead q-axis current $\Delta I_q$ may be used.

When the q-axis current $\Delta I_q$ is used, $r_1^*$ is multiplied by 1.5 and $L_s\sigma^*$ is multiplied by 0.5. In such a case, variation in q-axis current can be cancelled out by the setting error between the two but the deviation of d-axis is not cancelled. Consequently, q-axis magnetic field is not rendered to be zero and the problem of the occurrence of interference between d- and q-axes still remains.

The slip angular frequency arithmetic unit 19 will now be described.

The slip angular frequency arithmetic unit 19 determines a slip angular frequency $\omega_s^*$ by receiving exciting current command $I_d^*$ and torque current command $I_q^*$ and executing the following operation:

$$\omega_s^* = \frac{r_2 \cdot I_q^*}{M \cdot I_d^*} \quad \cdots (11)$$

where $r_2$ is secondary resistance design value of the induction motor 2 and M is exciting inductance.

This accounts for the slip angular frequency $\omega_s^*$ having a characteristic with respect to primary angular frequency $\omega_1^*$ as shown in Fig. 12.

The coordinate transformation 4 will now be described.

Correction values $\Delta V_d^*$ and $\Delta V_q^*$ determined by the current controller 8 are respectively added to output signals $V_d^*$ and $V_q^*$ of the voltage command arithmetic unit 5 by means of the adders 17 and 18 to provide voltage component commands $V_d^{**}$ and $V_q^{**}$ of the rotating magnetic field coordinate system which are delivered to the coordinate transformation 4.

The coordinate transformation 4 performs an operation expressed by equation (12) to deliver three-phase AC output voltage commands $v_u^*$, $v_v^*$ and $v_w^*$ of the stator coordinate system.

$$\begin{bmatrix} v_u^* \\ v_v^* \\ v_w^* \end{bmatrix} = \begin{bmatrix} 1 & 0 \\ -1/2 & \sqrt{3}/2 \\ -1/2 & -\sqrt{3}/2 \end{bmatrix} \begin{bmatrix} \cos\omega_1{}^*t & -\sin\omega_1{}^*t \\ \sin\omega_1{}^*t & \cos\omega_1{}^*t \end{bmatrix} \begin{bmatrix} V_d^{**} \\ V_q^{**} \end{bmatrix} \quad \ldots (12)$$

Then, the PWM signal arithmetic unit 3 compares the output voltage commands $V_u^*$, $v_v^*$ and $v_w^*$ with a carrier proportional to a pulse number command signal $N_p^*$ standing for the output of the pulse mode generator 10 to produce on/off signals, which are delivered to the PWM inverter 1.

Responsive to the primary angular frequency command signal $\omega_1^*$, the pulse mode generator 10 generates the pulse number command signal $N_p^*$. When the power supply voltage fluctuates, the switching frequency changes in accordance with this fluctuation (not shown).

An example of the carrier signal frequency with respect to the primary angular frequency command signal $\omega_1^*$ is shown in Fig. 13.

Asynchronous PWM proceeds to make the carrier frequency constant for the primary angular frequency being in a range of from 0 to $\omega_0^*$, the pulse number command signal $N_p^*$ is sequentially decreased to 15, 9,3 and 1 for the primary angular frequency being in excess of $W_0^*$, and eventually running is carried out under PWM control of one pulse.

In this example, the asynchronous region turns into the synchronous region at the pulse number which is 15 but this may be done at the pulse number which is, for example, 9.

The characteristic of the function generator 800 shown in Fig. 4 is congruently depicted in Fig. 13.

As described previously, this function generator 800 converges the control variables $\Delta V_d^*$ and $\Delta V_q^*$ in order that the offset of the integrator in the region incapable of performing voltage control based on the current difference will not adversely affect the system.

In Fig. 13, gradual converging starts at a frequency at which $N_p^* = 15$ changes to $N_p^* = 9$ and zero is obtained concurrently with arrival at one pulse.

This converging region is a region in which voltage control is possible but current ripple is large because of a reduced pulse number and effective operation cannot be expected, and therefore control ratio (feedback control in the vector control system and in the slip frequency control system) is reduced. Thus, the timing for switching between the two systems is not particularly constrained by the pulse number and can be determined from a view point of whether voltage control is possible or not and whether current ripple is large or small.

In the region of one pulse, the vector control system does not operate completely and consequently only the slip frequency control system for controlling the primary angular frequency on the basis of the difference in primary current operates.

In the present embodiment, the gain of the vector control system starts dropping at a frequency where $N_p^* = 9$ takes place but this can be changed depending on the control scheme or the like factor.

To take care of the problem of the integrator offset and the like, the gain of the vector control system is dropped but by providing the function to reset the offset such as for example notch-off or notch return operation, the function generator 800 in the current controller 8 may be omitted.

In the case where the PWM pulse is decreased to the ultimate one pulse as described above, utilization rate of DC power supply voltage of the PWM inverter can be improved and DC current on the DC power supply side can be decreased.

Incidentally, regenerative running can be accomplished by making torque current command negative and inverting the polarity of output signal of the adder 808 (not shown).

As described above, since in the present embodiment terminal voltage necessary for the motor is fed and correction of the slip frequency (differences insensitivity and controllable object between the aforementioned control systems) is effected, excellent torque control can be carried out over the entire running region.

Fig. 14 shows a second embodiment of the invention. Only differential points from the first embodiment are shown. A torque command signal T* is calculated through a speed commander 23, an adder 24 for calculating the speed difference and a speed controller 25 and delivered to control command arithmetic unit 6. The speed controller 25 calculates proportional integration (P-I) of output signal $\Delta\omega_r$ of the adder 24 and delivers the torque command signal T*:

$$T^* = \left(P_A + \frac{K_A}{S}\right)(\omega_r^* - \omega_r) \qquad \ldots (13).$$

A control command arithmetic unit 6 calculates torque current command $I_q^*$ for the induction motor 2 from the torque command signal T* pursuant to the following equation:

$$I_q^* = K_T \cdot \frac{T^*}{I_d^*} \qquad \ldots (14)$$

where $K_T$ is constant.

According to the present embodiment, forward running and backward running are determined in accordance with positive and negative polarities of the speed commander 23 and even when load on the induction motor 2 changes abruptly, speed can be so controlled as to coincide with a command signal.

The present embodiment can also be combined with Automatic Train Operation (ATO) easily, thus making it easy to practice constant speed running control.

Fig. 15 shows a third embodiment of the present invention. Like the second embodiment, only differential points are depicted. The third embodiment differs from the first embodiment of Fig. 1 in that a switching signal generator 26 for switching the control types is provided in order to forcibly make output signals $\Delta V_d^*$ and $\Delta V_q^*$ of the current controller 8 zero and multipliers 270 and 271 are provided which multiply an output signal of the switching signal generator 26 by the output signals $\Delta V_d^*$ and $\Delta V_q^*$ of the current controller 8. It is to be noted that when $\Delta V_d^*$ and $\Delta V_q^*$ are forcibly rendered to be zero, inputs to the controllers 803 and 806 shown in Fig. 4 are obviously rendered to be zero simultaneously forcibly, though not shown.

An electric rail car applied with the present embodiment is improved in torque characteristic in the low speed region in comparison with a conventional electric rail car of slip frequency control type so as to relieve load imposed on the conventional type electric rail car but on the other hand large requisite torque is needed and slip is liable to occur.

Accordingly, with a view of permitting combination of the electric rail cars of different control schemes, the control type of the present embodiment is forcibly applied with the slip frequency control to permit driving covering the entire running region.

The operation will now be described. Output signals of the controllers 803 and 806 shown in Fig. 4 are forcibly rendered to be zero and hence current components $I_d$ and $I_g$ do not coincide with command signals $I_d^*$ and $I_q^*$ so that the primary angular frequency may be controlled on the basis of the current difference between magnitude $I_1$ of output current and $I_1^*$. As a result, the slip frequency control can proceed in the entire running region.

In the conventional electric rolling stock, the inverter output voltage is adjusted in accordance with the primary current difference only when starting and in order to permit coordination with that control system, the vector control system may be operated only in that region.

According to the present embodiment, when an electric car applied with the present invention and a conventional electric rail car of slip frequency control type are organized in the same train and caused to run, localization of load sharing between the electric rail cars can be prevented. Especially, this advantage is remarkable in electric locomotives.

Fig. 16 shows a fourth embodiment of the invention. As in the precedence, only differential points are depicted. The present embodiment differs from the second embodiment shown in Fig. 14 in that a speed detector 28 for detecting the actual speed of an electric vehicle, for example, the speed of a non-driven shaft is provided and torque command signal T* is calculated on the basis of the difference between speed command signal $\omega_r^*$ and detection value $\omega_r$ of the speed detector 28. The torque command signal T* is expressed by the following equation:

$$T^* = \left( P_A + \frac{K_A}{S} \right) (\omega_r^* - \omega_T) \qquad \ldots (15)$$

According to the present embodiment, even when driving wheels slip, the torque command can be prepared accurately.

Fig. 17 shows a fifth embodiment of the invention.

The present embodiment differs from the Fig. 1 first embodiment in that in place of the coordinate transformation 4, an output voltage command arithmetic unit 30 and a coordinate transformation 29 are provided.

The output voltage command arithmetic unit 30 has a pattern based on characteristic curves of induction motor 2 which is representative of magnitude V* of output voltage fed in accordance with primary angular frequency command signal $\omega_1^*$ and the magnitude V* delivered to the coordinate transformation 29 is variable with filter capacitor voltage $V_{FC}$.

Detailed construction of the coordinate transformation 29 is shown in Fig. 18. The contents of calculation of the coordinate transformation 29 is expressed by the following equation:

$$\left.\begin{aligned} v_u^* &= V_1^{**} \cdot \cos(\omega_1^* t + \theta_v^*) \\ v_v^* &= V_1^{**} \cdot \cos(\omega_1^* t - 2\pi/3 + \theta_v^*) \\ v_w^* &= V_1^{**} \cdot \cos(\omega_1^* t - 4\pi/3 + \theta_v^*) \\ \theta_v^* &= \pi/2 - \tan^{-1}\left( \frac{V_d^{**}}{V_q^{**}} \right) \\ V_1^{**} &= V^* + K_v (v_1^* - V^*) \end{aligned}\right\} \qquad \ldots (16)$$

where $K_v$ represents output signal of a function generator 2900.

According to the present embodiment, with $K_v$ rendered to be zero forcibly, control type equivalent to the slip frequency control type used in the conventional electric rail car is available and when the electric rail car applied with the present invention and the conventional electric rail car are organized in the same train the load is shared in each car in uniform.

The present invention may also be applied to synchronous motors in addition to the induction motor in a similar way.

Further, the present invention may also be applicable to rolling mills, elevators and other motors for general use in addition to the electric rail car.

Fig. 19 shows a sixth embodiment of the invention.

Differential points from the fifth embodiment shown in Fig. 17 will be described.

There are provided a first control command arithmetic unit 6 for delivering an exciting current command signal Id * and a torque current command signal $I_q^*$ and a second control command arithmetic unit 31 for delivering a primary current command signal $I_1^*$ and a slip angular frequency command signal $\omega_s^*$, and vector control is switched to slip frequency control or vice versa in accordance with a primary angular frequency signal $\omega_1^*$ or a corresponding value.

The second control command arithmetic unit 31 delivers the primary current command signal $I_1{}^*$ based on the forward/backward command signal D*, power running/braking force command signal N*, $\omega_1{}^*$ and filter capacitor voltage signal and the slip angular frequency command signal $\omega_s{}^*$ to adders 32 and 33, respectively.

The adder 32 delivers a difference between the primary current command signal $I_1{}^*$ and a primary current detection signal $I_1$ to a controller 34.

The controller 34 calculates a signal $\Delta\omega_s{}^*$ for correcting the slip angular frequency and delivers it to the adder 33.

The adder 33 calculates a slip angular frequency command signal $\omega_{s2}{}^*$ for controlling the slip frequency and delivers it to a switching unit 34.

As will be described later, the switching unit 34 responds to the primary angular frequency command signal $\omega_1{}^*$ to sequentially switch a slip angular frequency command signal $\omega_{s1}{}^*$ during vector control and the slip angular frequency command signal $\omega_{s2}{}^*$ during slip frequency control so as to deliver a slip angular frequency command signal $\omega_s{}^{**}$ to an adder 22. 803 is $I_d$ controller, 806 is $I_q$ controller, and 809 is $I_1$ controller. 810 calculates $I_1 = \sqrt{I_d{}^2 + I_q{}^2}$.

Fig. 20 shows detailed construction of the slip angular frequency switching unit 34.

A function generator 3400 responds to the primary angular frequency command signal $\omega_1{}^*$ to produce a switching gain Kω which is delivered to a multiplier 3402.

The contents of operation by the switching unit 34 is given by the following equation:

$$\omega_s{}^{**} = \omega_{s2}{}^* + K\omega\ (\omega_{s1}{}^* - \omega_{s2}{}^*) \qquad (17)$$

The operation will now be described.

On the basis of output signal $I_d{}^*$ and $I_q{}^*$ of the first control command arithmetic unit 6, output voltage command $V_1{}^*$ and slip angular frequency command $\omega_s{}^*$ during vector control are calculated. On the basis of output signals $I_1{}^*$ and $\omega_s{}^*$ of the second control command arithmetic unit 31, output voltage command V* and slip angular frequency command $\omega_{s2}{}^*$ during slip frequency control are calculated.

For switching the vector control system and the slip frequency control system, switching of output voltage commands is effected by a coordinate transformation 29 and switching of slip angular frequency is effected by the switching unit 34. Further, the slip frequency control system can be maintained by a command from an operation console.

The present embodiment differs from the other first to fifth embodiments in that while in the other embodiments the inverter 1 is applied with the voltage commands having phase relation, i.e., vectors even in the region where closed loop control of exciting current and torque current is difficult to achieve (extending from the region in which ripple of output current increases to the one pulse region), the control is completely switched to the slip frequency control system, if necessary in the present embodiment (this switching can be accomplished by changing switching gains $K_v$ and $K_w$ from 1 to 0).

By completely switched to the slip frequency control system, the present embodiment can be combined with the conventional electric rail car applied with the control system having slip frequency control based on primary current feedback control.

Fig. 21 shows a seventh embodiment of the invention. The present embodiment differs from the first embodiment shown in Figs. 1 and 4 in that output signal of an adder 811 is used as input signal to the controller 809.

The adder 811 adds output signal $\Delta I_d$ of the adder 801 and output signal $\Delta I_q$ of the adder 804 to produce output signal $\Delta I_1{}^*$ which is delivered to the controller 809.

The operation of the present embodiment will now be described. Fig. 22 shows change $\Delta I_1$ in magnitude of the primary current with respect to change of motor constant $L_s\sigma^*$ and q-axis magnetic flux $\phi_{2q}$. In the figure, solid line represents change $\Delta I_1$ which is normalized in magnitude by the the magnitude of the rated current and chained line represents q-axis magnetic flux $\phi_{2q}$ which is normalized in magnitude by the magnitude of the rated magnetic flux. As set value $L_s\sigma^*$ in the control system of leakage inductance increases, $\Delta I_1$ and $\phi_{2q}$ both increase in positive sense. This tendency differs from that with respect to $r_1{}^*$ and $\omega_s{}^*$ explained in connection with Figs. 9 and 10 in that when $\omega_1{}^*$ is corrected on the basis of $\Delta I_1$, $\phi_{2q}$ increases conversely. Thus, in the present embodiment, $\Delta I_d$ is added with $\Delta I_q$ to provide the sum which is $\Delta I_1{}^*$ and the primary angular frequency is corrected with respect to a set error of $L_s\sigma^*$ on the basis of the $\Delta I_1{}^*$. This takes advantage of the fact that $\Delta I_d$ and $\Delta I_q$ are opposite in polarity and substantially equal in magnitude with respect to $L_s\sigma^*$ as shown at dotted line in Figs. 7 and 8, thereby ensuring that correction sensitivity of the primary angular frequency $\omega_1{}^*$ to the set error of $L_s\sigma^*$ can be rendered to be substantially zero so as to secure correction sensitivity to $r_1{}^*$ and $\omega_s{}^*$.

In this manner, according to the present embodiment, even when the $L_s\sigma^*$ has a large setting error, stable correction of $\omega_1^*$ can be effected without increasing $\phi_{2q}$.

Fig. 23 shows an eighth embodiment of the invention. The present embodiment differs from the first embodiment of Figs. 1 and 4 in that a multiplier 812 for multiplying output signal of the adder 808 by output signal of the adder 801 is provided and output signal of the multiplier 812 is inputted to the controller 809.

The operation of the present embodiment will now be described. As shown in Fig. 22, both of primary current $\Delta I_1$ and q-axis magnetic flux $\phi_{2q}$ with respect to change of set value $L_s\sigma^*$ in the control system of leakage inductance increase or decrease. Therefore, when the primary angular frequency is corrected on the basis of $\Delta I_1$, $\phi_{2q}$ increases conversely.

Thus, the present embodiment takes advantage of the fact that $\Delta I_d$ and $\Delta q$ with respect to motor constants $r_1^*$ and $\omega_s^*$ both increase or decrease but $\Delta I_d$ and $\Delta I_q$ with respect to change of $L_s\sigma^*$ increase or decrease in opposite senses so as to suppress $\phi_{2q}$ with respect to change of $L_s\sigma^*$ by utilizing the polarity of $\Delta I_d$. More particularly, as $L_s\sigma^*$ increases, $\Delta I_1$ also increases but $\Delta I_d$ decreases in negative sense as shown in Fig. 7. When the $\Delta I_1$ is multiplied by the polarity of $\Delta I_d$ to calculate $\Delta I_1^*$, the relation can be obtained in which $\Delta I_1^*$ and q-axis magnetic flux $\phi_{2q}$ increase or decrease in opposite senses. Consequently, as $\Delta I_1^*$ decreases in negative sense, the controller 809 increases the primary angular frequency $\omega_1^*$ to control $\phi_{2q}$ such that it becomes zero.

According to the present embodiment, since d-axis of the control system can be controlled with respect to the motor constants such that it coincides with magnetic flux (m-axis) of the motor, the d-axis controller 87 and q-axis controller 88 do not interfere with each other and can operate independently of each other.

As described above, according to the first to eighth embodiments, there are provided the controller for controlling the primary angular frequency such that d-axis of the control system coincides with magnetic flux (m-axis) of the motor and the current controllers for correcting d-axis voltage and q-axis voltage, respectively, whereby the individual controllers correct the voltage errors with respect to changes of motor constants so that as shown in Fig. 11 $r_1^*/r_1$, $L_s\sigma^*/L_s\sigma$ and $\omega_s^*/\omega_s$ may be rendered to be 1.0 to produce torque exactly as commanded and to permit high-response torque control.

The foregoing first to eighth embodiments have been described by way of example of electric rail car driving AC motor control apparatus but the essence of the present invention may be applied also to apparatus for other purposes in addition to the electric rail car, for example, an AC motor control apparatus of rolling mill.

According to the invention, the effect of controlling torque more accurately can be attained.

Further, even in the region in which inverter output voltage control is not permitted, the control can advantageously continue to proceed.

Further, torque fluctuation in the low speed region can advantageously be prevented and in the high speed region, the power supply voltage utilization rate can advantageously be improved by 115% or more.

## Claims

1. A control apparatus of an AC motor (2) driven by a power converter (1) for delivering alternating current of variable voltage and variable frequency, characterized in that said apparatus comprises vector control means (4, 5, 6, 7, 8, 9) for controlling a vector of primary current of said motor and slip frequency control means (16, 10, 19, 29, 21, 22, 23) for controlling a slip frequency of said motor, and that these two control systems are used in combination.

2. A control apparatus of an AC motor (2) driven by a power converter (1) for delivering alternating current of variable voltage and variable frequency, characterized in that said apparatus comprises vector control means (4, 5, 6, 7, 8, 9) for controlling a primary current of said motor and slip frequency control means (16, 10, 19, 29, 21, 22, 23) for controlling a slip frequency of said motor on the basis of a difference between a command of magnitude ($I_1^*$) of the primary current of said motor and the magnitude ($I_1$) of the primary current.

3. A control apparatus of an AC motor (2) driven by a power converter (1) for delivering alternating current of variable voltage and variable frequency, characterized by the provision of control systems (8, 9, 17, 18) which are respectively for closed loop control of the magnitude of primary current of said motor and exciting and torque components constituting the primary current.

4. An AC motor control apparatus according to Claim 3, characterized in that the slip frequency of said motor is controlled on the basis of the closed loop control system (9, 8, 19) for the magnitude of primary current of said motor, an exciting component of an output voltage command for said power converter is controlled on the basis of the closed loop control system (9, 8, 17) for the exciting component of said primary current, and a torque component of the output voltage command for said power converter is controlled on the basis of the closed loop control system (9, 8, 18) for the torque component of said primary current.

**5.** A control apparatus of an AC motor (2) driven by a power converter (1) for delivering alternating current of variable voltage and variable frequency, characterized by the provision of means (9, 8, 19) for controlling a slip frequency on the basis of a difference between the magnitude of primary current of said motor and a command value thereof, means (5) for delivering an exciting component and a torque component of an output voltage command for said power converter on the basis of respective command values of an exciting component and a torque component which constitute the primary current of said motor, means (8, 17) for correcting the exciting component of output voltage command in accordance with a difference between the exciting component of said primary current and a command value thereof, means (8, 18) for correcting the torque component of output voltage command in accordance with a difference between the torque component of said primary current and a command value thereof, and means (800) for preventing outputs of said exciting component correcting means and torque component correcting means in a region in which control of output voltage of said power converter is invalidated.

**6.** A control apparatus of an AC motor (2) driven by a power converter (1) for delivering alternating current of variable voltage and variable frequency, characterized by the provision of vector control means (4, 5, 6, 7, 8, 9) for controlling a vector component of primary current of said motor, and means (809) for making said vector control means valid over the entire operation frequency region of said motor including a region in which output voltage control of said power converter by an output voltage command for said power converter is invalidated.

**7.** A control apparatus of an AC motor (2) driven by a power converter (1) for delivering alternating current of variable voltage and variable frequency, characterized by the provision of means (4, 5, 6, 7, 8, 9) for controlling a vector of primary current of said motor, slip frequency control means (16, 10, 19,20, 21, 22, 23) for controlling a slip frequency of said motor, and means (6, 31) for switching said vector control means and said slip frequency control means on the basis of an output frequency of said power converter.

**8.** A control apparatus of an AC motor (2) driven by a power converter (1) for delivering alternating current of variable voltage and variable frequency, characterized by the provision of means (4, 5, 6, 7, 8, 9) for controlling a vector of primary current of said motor, slip frequency control means (16, 10, 19, 20, 21, 22, 23) for controlling a slip frequency of said motor, means (28) for detecting a rotation speed of said AC motor, and means (24, 25) for preparing a command value of a torque component of said primary current in accordance with a difference between rotation speed detection value and command value thereof.

**9.** A control apparatus of an AC motor (2) driven by a power converter (1) for delivering alternating current of variable voltage and variable frequency, characterized by the provision of means (5) for preparing a first output voltage command for said power converter in accordance with commands of exciting and torque components of primary current of said motor, slip frequency control means (16, 10, 19, 20, 21, 22, 23) for controlling a slip frequency of said motor on the basis of a difference between a command of magnitude of said primary current and the magnitude of said primary current, means (22, 23, 20) for calculating an operating frequency of said power converter from said slip frequency and a rotation frequency of said motor, means (29) for preparing a second output voltage command for said power converter in accordance with said operating frequency, and means for preparing a new output voltage command for said power converter from said first and second output voltage commands.

**10.** A control apparatus of an AC motor (2) driven by a power converter (1) for delivering alternating current of variable voltage and variable frequency, characterized by the provision of means for commanding exciting and torque commands of voltage delivered out of said power converter, means for commanding an output voltage in accordance with an output frequency of said power converter or a corresponding value, and means for switching these commanding means.

**11.** An AC motor control apparatus according to Claim 10, characterized in that said means for switching commanding means switches two control means in accordance with an output frequency of said power converter or a corresponding value.

**12.** A control apparatus of electric vehicle having a power converter (1) for delivering alternating current of variable voltage and variable frequency, an AC motor (2) driven by output of the power converter and a railway electric vehicle energized by the AC motor, characterized in that said AC motor is controlled through vector control (4, 5, 6, 7, 8, 9).

**13.** A control apparatus of electric vehicle having a power converter (1) for delivering alternating current of variable voltage and variable frequency, an AC motor (2) driven by output of the power converter and an electric vehicle energized by the AC motor, characterized by the provision of means (6) for generating commands of exciting and torque components of primary current of said AC motor on the basis of a command from a master controller (7), means (19) for preparing a slip frequency from the current commands, means (5) for preparing commands of exciting and torque components of output voltage of said power converter from said current commands, means (8, 17) for correcting said exciting component of output voltage commands in accordance with a difference between said exciting component command of primary current and an exciting component, means (8, 18) for correcting said torque component of output voltage commands in accordance with a difference between said torque component command of primary current and a torque component, and means (9, 8) for correcting said slip frequency on the basis of a difference between the magnitude of primary current of said motor and a command thereof.

**14.** A control apparatus of electric vehicle having an inverter (1) for delivering alternating current of variable voltage and variable frequency, an induction motor (2) driven by output of the inverter, and means (16, 22, 23, 20, 21) for preparing a frequency of said inverter on the basis of a rotation frequency and a slip frequency of the induction motor, characterized by the provision of means (6) for generating commands of exciting and torque components of primary current of said induction motor on the basis of a command from a master controller (7), means (19) for preparing a slip frequency from the current commands, means (5) for preparing commands of exciting and torque components of output voltage of said inverter from said current commands, means (8, 17) for correcting said exciting component of output voltage commands in accordance with a difference between said exciting component command of primary current and an exciting component, means (8, 18) for correcting said torque component of output voltage commands in accordance with a difference between said torque component command of primary current and a torque component, means (9, 8) for correcting said slip frequency on the basis of a difference between the magnitude of primary current of said motor and a command thereof, and means (30, 29) for decreasing output of said means for correcting said output voltage commands in a predetermined inverter frequency region.

**15.** A current controller characterized by the provision of means for comparing the magnitude of a detected current with a command value, means for comparing a reactive component of said detected current with a command value, and means for comparing an active component of said detected current with a command value.

**16.** A current command generator characterized in that on the basis of a command of torque to be generated by an AC motor, commands of exciting and torque components of primary current of said motor are generated which comply with a rotation frequency of said motor or a corresponding value.

FIG. 1

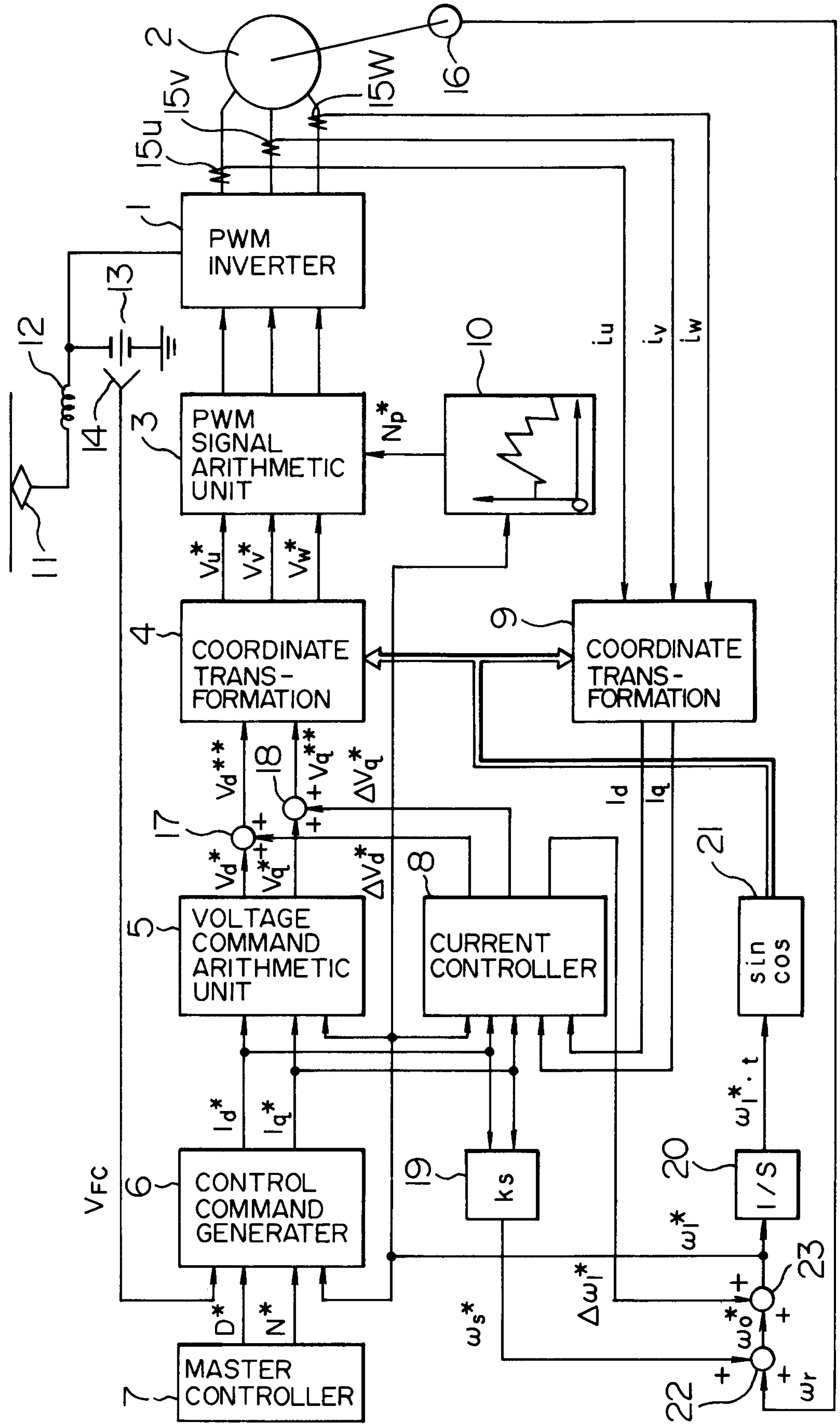
PWM INVERTER
PWM SIGNAL ARITHMETIC UNIT
COORDINATE TRANS-FORMATION
COORDINATE TRANS-FORMATION
VOLTAGE COMMAND ARITHMETIC UNIT
CURRENT CONTROLLER
CONTROL COMMAND GENERATER
MASTER CONTROLLER
ks
1/S
sin cos
VFC
D*
N*
Id*
Iq*
Vd*
Vq*
Vd**
Vq**
ΔVd*
ΔVq*
Vu*
Vv*
Vw*
Np*
iu
iv
iw
Id
Iq
ωs*
ωr
ωo*
Δωl*
ωl*
ωl*·t

FIG. 2

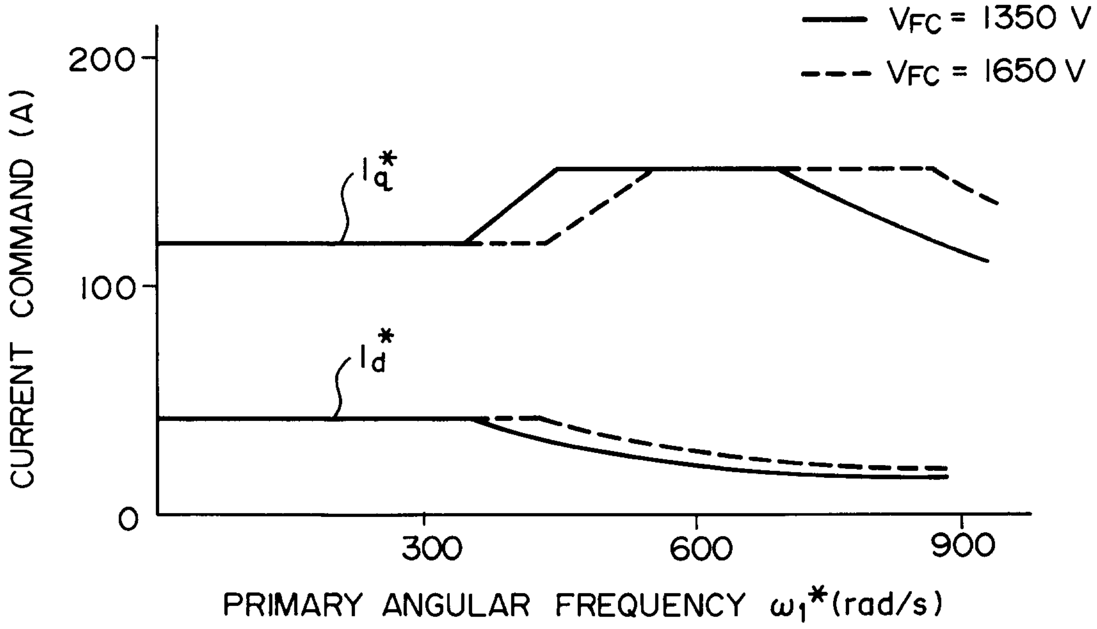
VFC = 1350 V
VFC = 1650 V
200
100
0
300
600
900
CURRENT COMMAND (A)
PRIMARY ANGULAR FREQUENCY ω1*(rad/s)
Iq*
Id*

FIG. 3

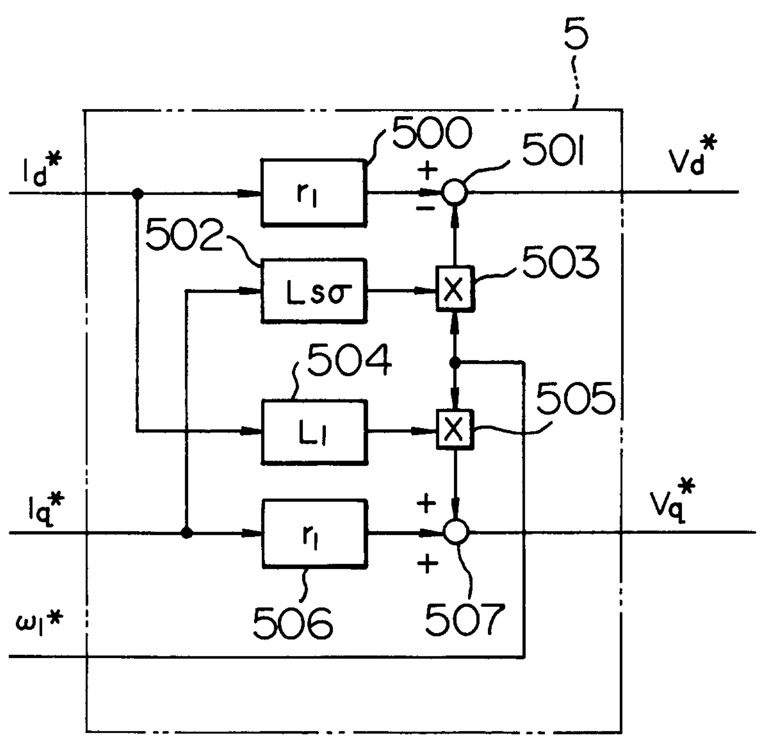
5
Id*
Vd*
Iq*
Vq*
ω1*
r1
Lsσ
L1
r1
500
501
502
503
504
505
506
507

FIG. 4

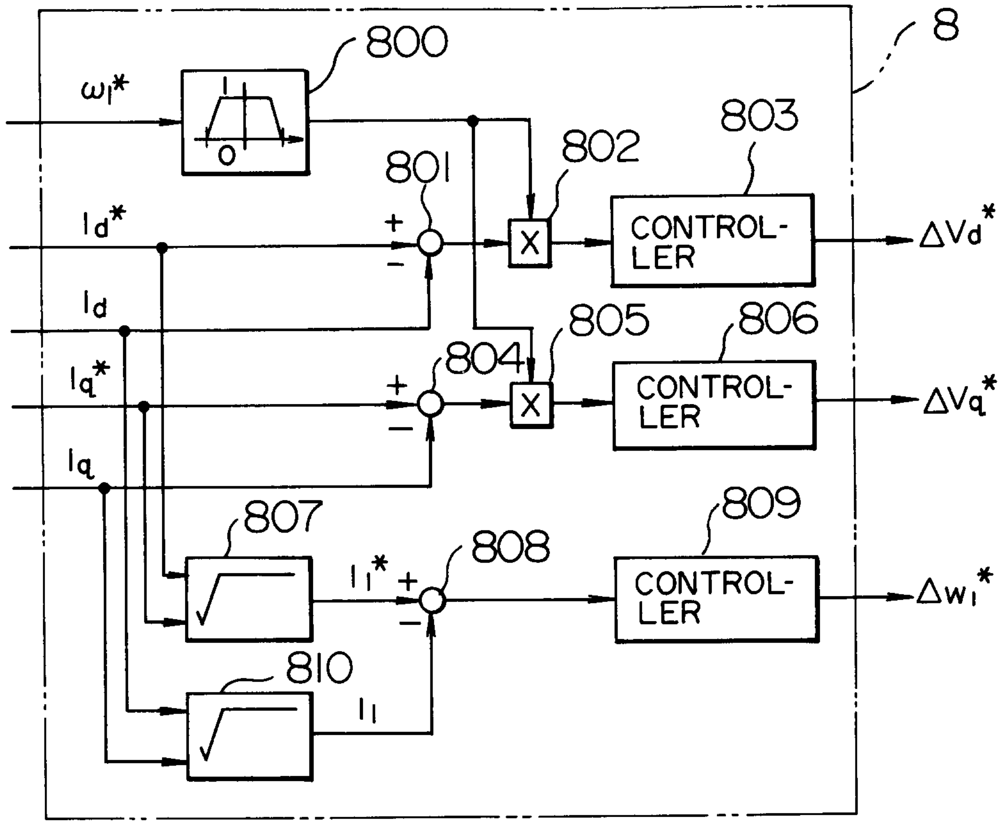
8
800
803
802
801
CONTROL-
LER
805
806
804
CONTROL-
LER
807
808
809
CONTROL-
LER
810
ω1*
Id*
Id
Iq*
Iq
I1*
I1
ΔVd*
ΔVq*
Δw1*

FIG. 5

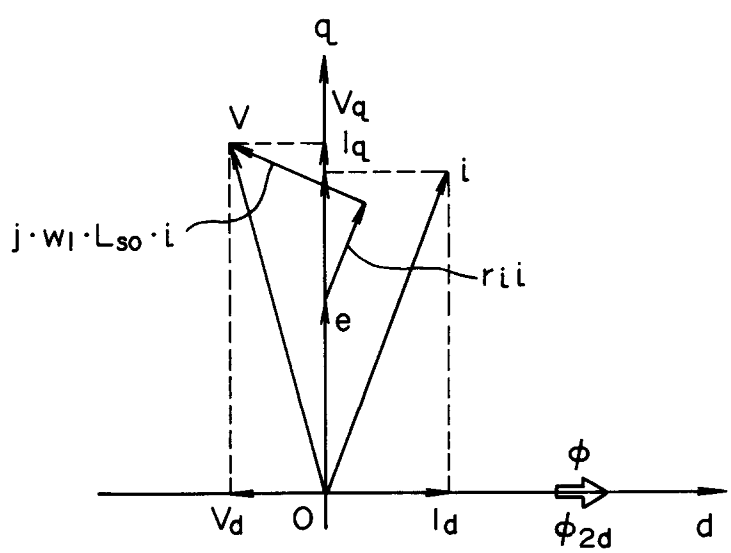
q
V
Vq
Iq
i
j·w1·Lso·i
ri i
e
φ
Vd
O
Id
φ2d
d

FIG. 6

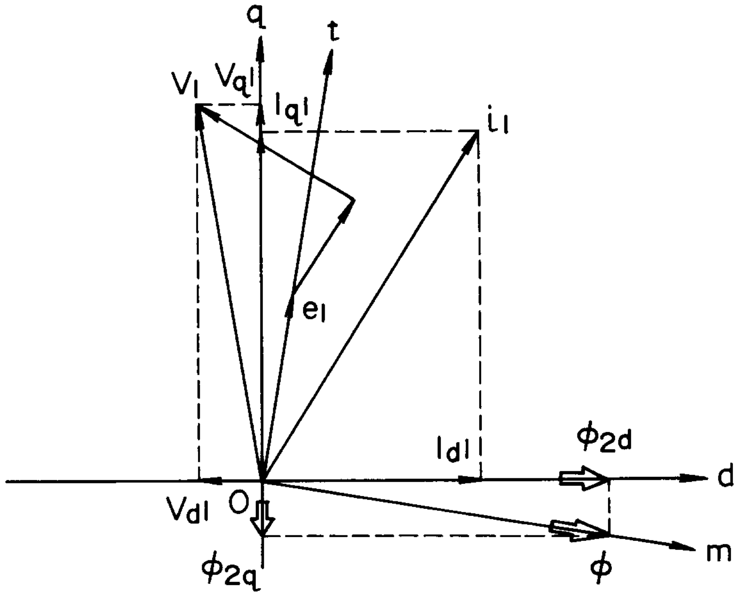
q
t
V1
Vq1
Iq1
i1
e1
Id1
φ2d
d
Vd1
O
φ2q
φ
m

FIG. 7

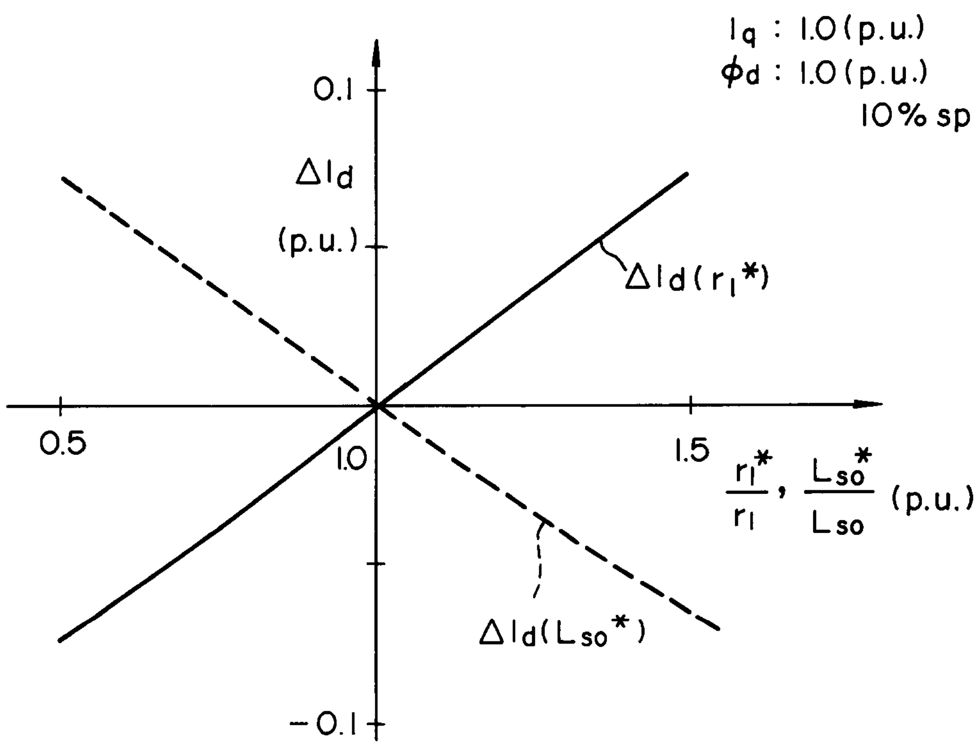
Iq : 1.0 (p.u.)
φd : 1.0 (p.u.)
10% sp
0.1
ΔId
(p.u.)
ΔId(r1*)
0.5
1.0
1.5
r1*/r1, Lso*/Lso (p.u.)
ΔId(Lso*)
−0.1

FIG. 8

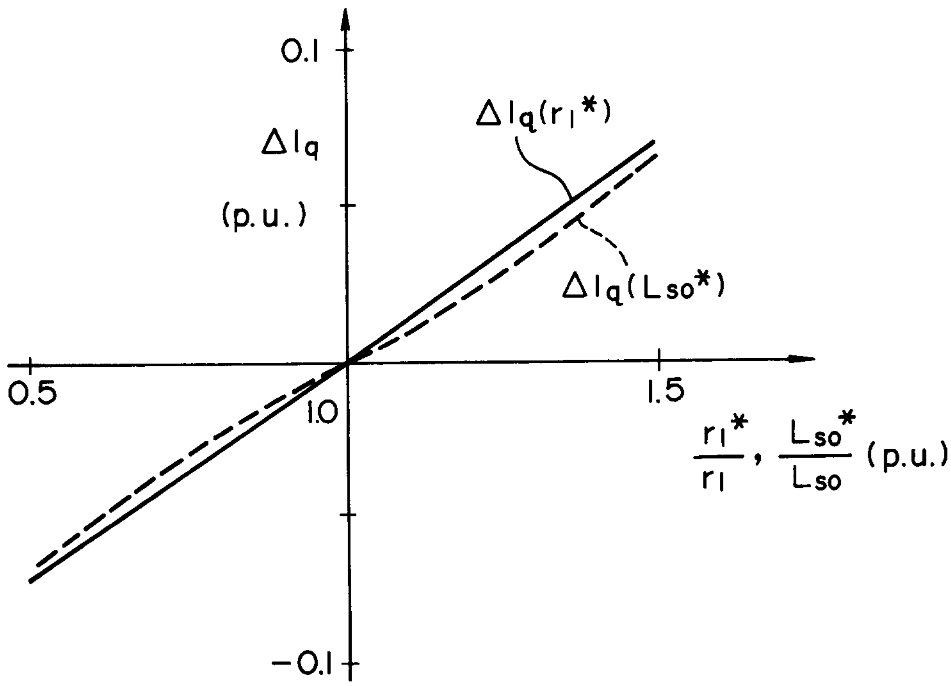
0.1
ΔIq
(p.u.)
ΔIq(r1*)
ΔIq(Lso*)
0.5
1.0
1.5
r1*/r1, Lso*/Lso (p.u.)
−0.1

FIG. 9

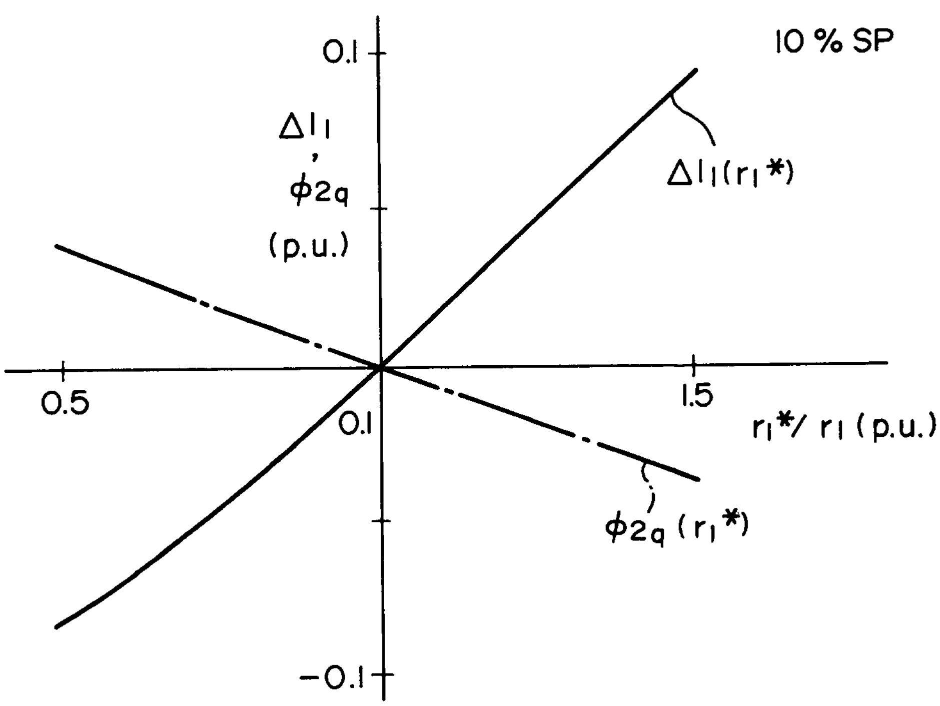
0.1
ΔI1
,
φ2q
(p.u.)
10 % SP
ΔI1(r1*)
0.5
0.1
1.5
r1*/ r1 (p.u.)
φ2q (r1*)
−0.1

FIG. 10

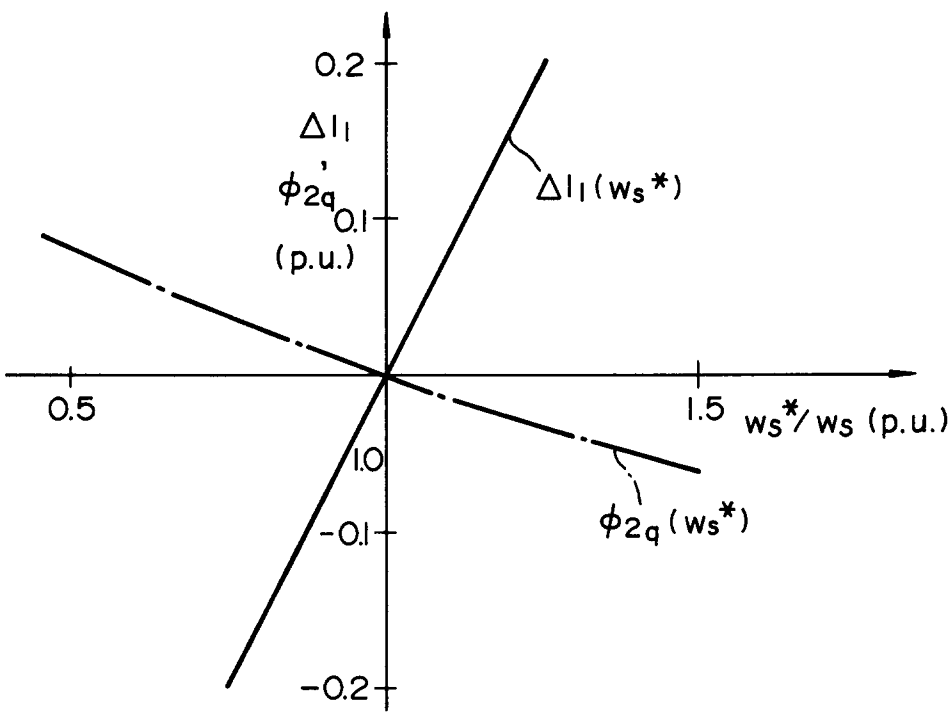

FIG. 11

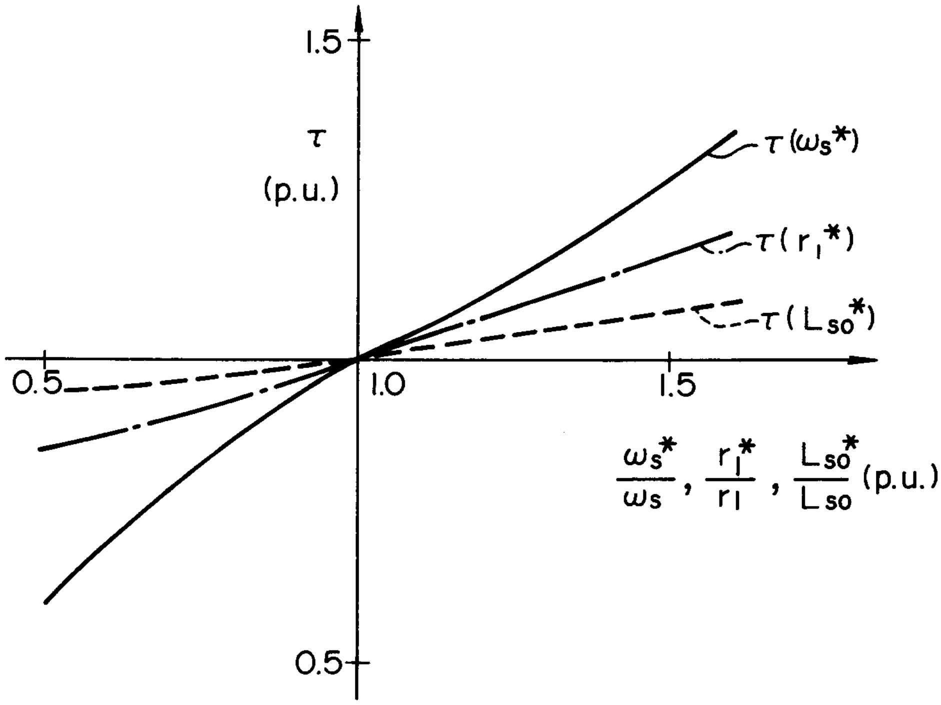
1.5
τ
(p.u.)
τ(ωs*)
τ(r1*)
τ(Lso*)
0.5
1.0
1.5
ωs*/ωs , r1*/r1 , Lso*/Lso (p.u.)
0.5

FIG. 12

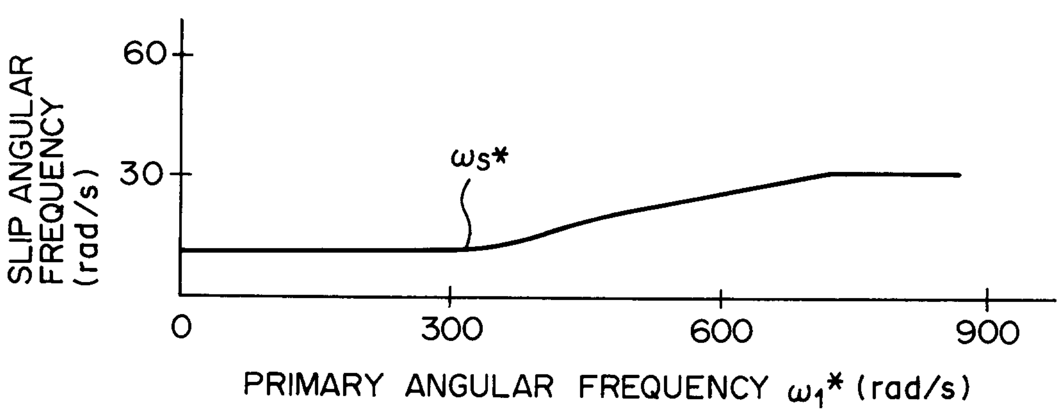
SLIP ANGULAR FREQUENCY (rad/s)
60
30
ωs*
0
300
600
900
PRIMARY ANGULAR FREQUENCY ω1* (rad/s)

FIG. 13

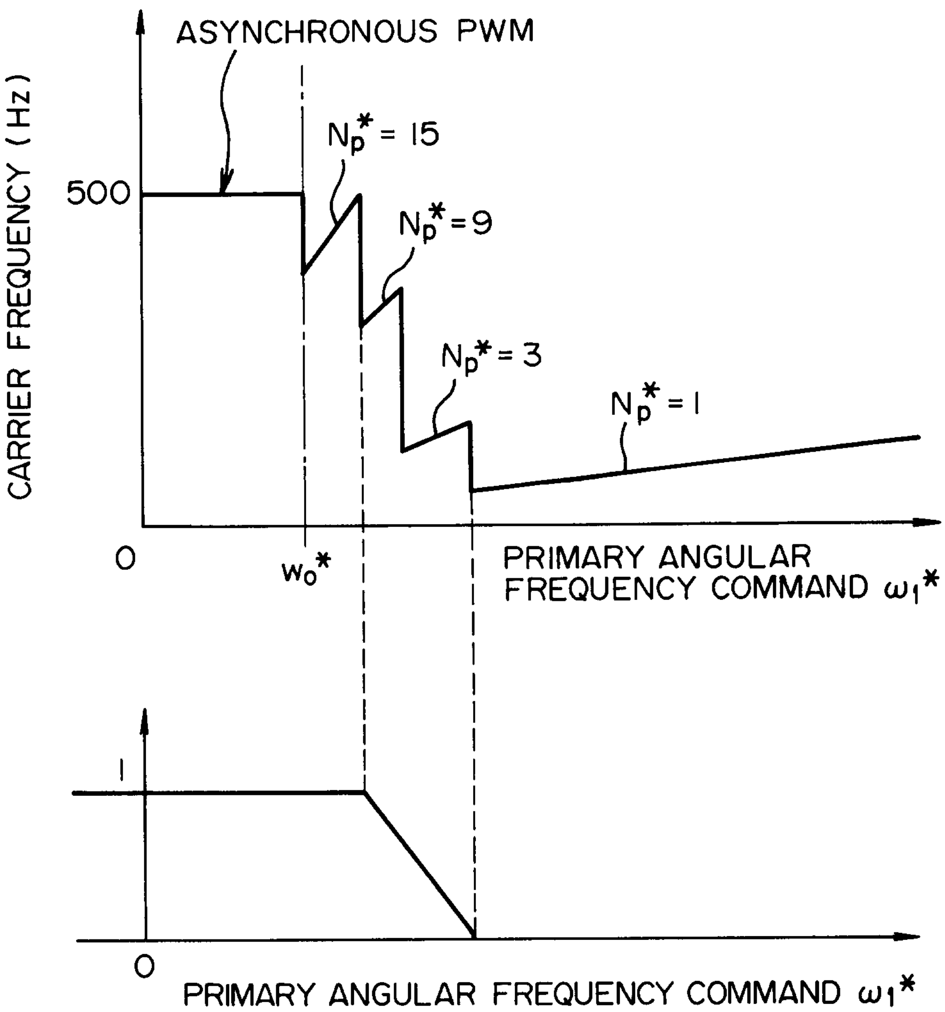
ASYNCHRONOUS PWM
CARRIER FREQUENCY (Hz)
500
Np* = 15
Np* = 9
Np* = 3
Np* = 1
0
Wo*
PRIMARY ANGULAR FREQUENCY COMMAND ω1*
1
0
PRIMARY ANGULAR FREQUENCY COMMAND ω1*

FIG. 14

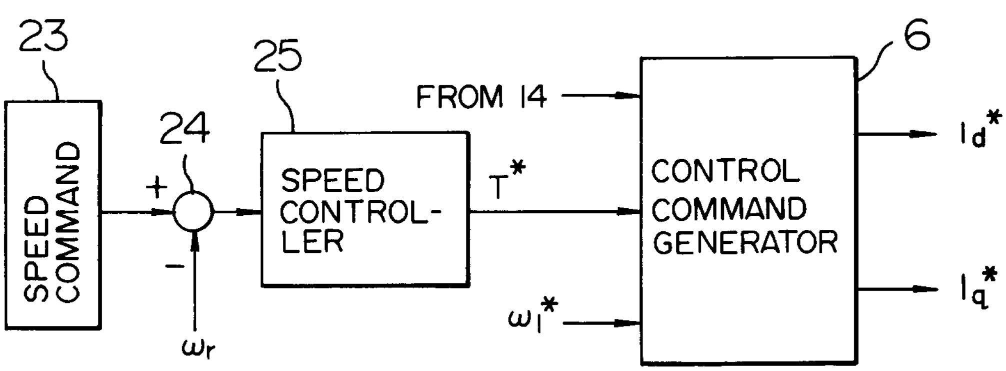
23
SPEED COMMAND
24
+
−
ωr
25
SPEED CONTROLLER
T*
FROM 14
ω1*
6
CONTROL COMMAND GENERATOR
Id*
Iq*

FIG. 15

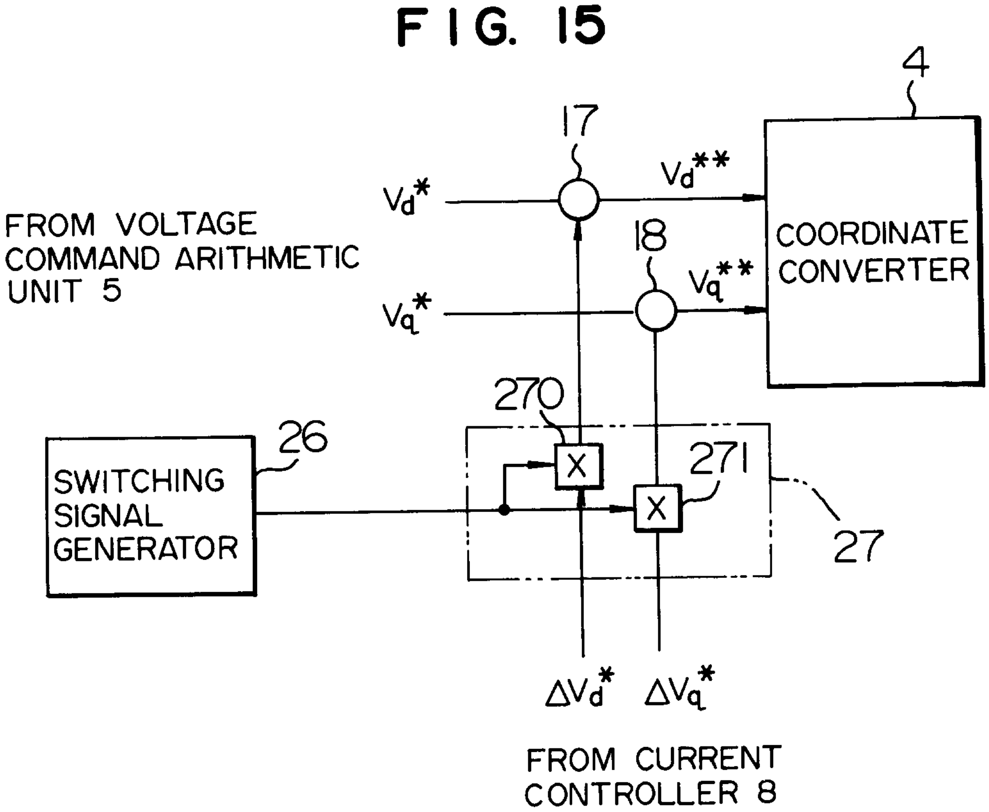
4
17
$V_d^*$
$V_d^{**}$
FROM VOLTAGE
COMMAND ARITHMETIC
UNIT 5
18
$V_q^{**}$
COORDINATE
CONVERTER
$V_q^*$
270
26
SWITCHING
SIGNAL
GENERATOR
X
271
X
27
$\Delta V_d^*$
$\Delta V_q^*$
FROM CURRENT
CONTROLLER 8

FIG. 16

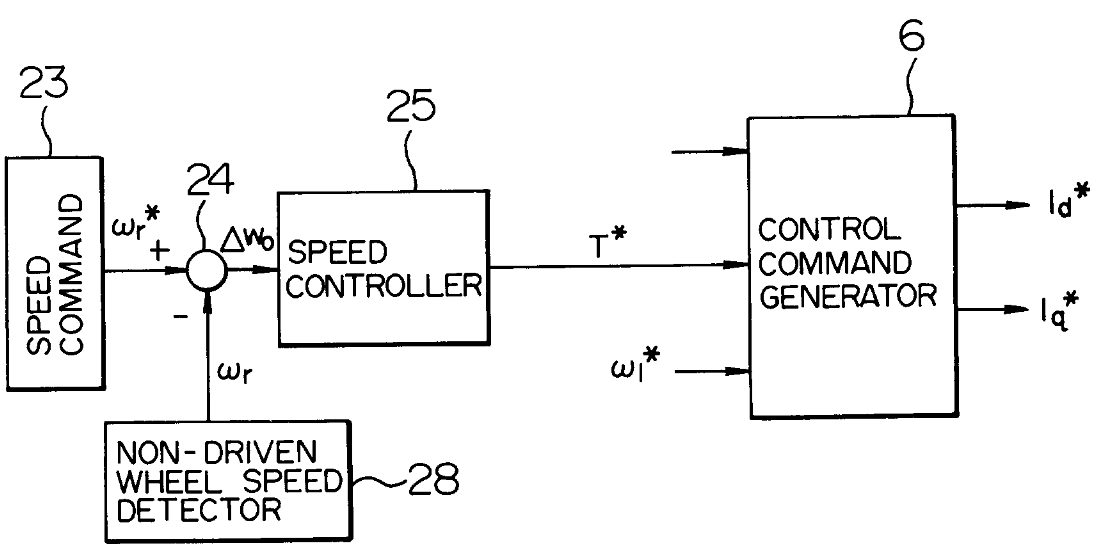
6
23
25
24
SPEED
COMMAND
$\omega_r^*$
+
$\Delta W_0$
SPEED
CONTROLLER
$T^*$
CONTROL
COMMAND
GENERATOR
$I_d^*$
$I_q^*$
-
$\omega_r$
$\omega_1^*$
NON-DRIVEN
WHEEL SPEED
DETECTOR
28

FIG. 17

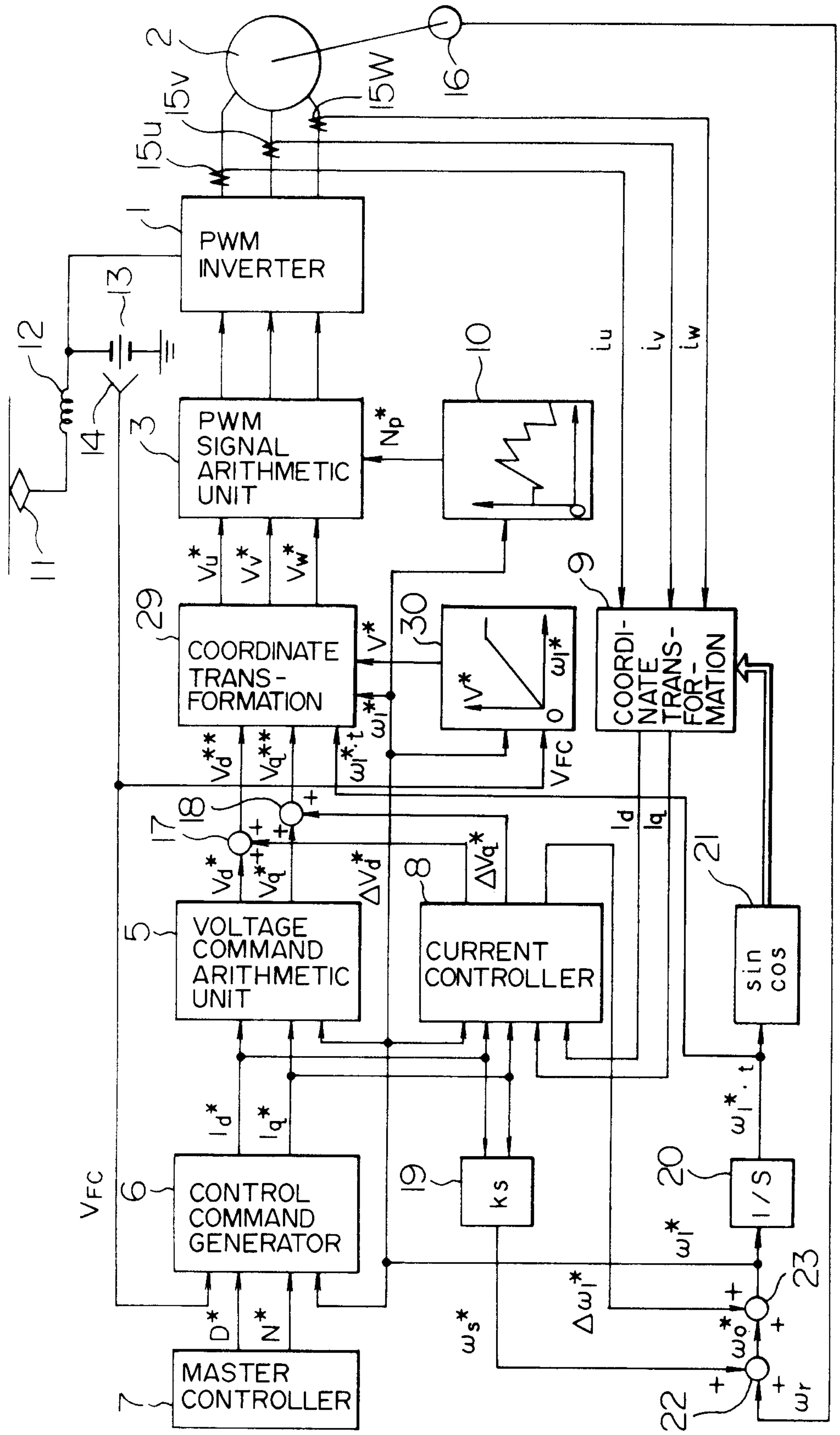
PWM INVERTER
PWM SIGNAL ARITHMETIC UNIT
COORDINATE TRANS-FORMATION
COORDI-NATE TRANS-FOR-MATION
VOLTAGE COMMAND ARITHMETIC UNIT
CURRENT CONTROLLER
CONTROL COMMAND GENERATOR
MASTER CONTROLLER
ks
1/S
sin cos
VFC
iu
iv
iw
Id
Iq
Np*
Vu*
Vv*
Vw*
V*
ω1*
Vd**
Vq**
ω1*·t
Vd*
Vq*
ΔVd*
ΔVq*
Id*
Iq*
D*
N*
ωs*
Δω1*
ωo*
ωr
1
2
3
5
6
7
8
9
10
11
12
13
14
15u
15v
15W
16
17
18
19
20
21
22
23
29
30

F I G. 18

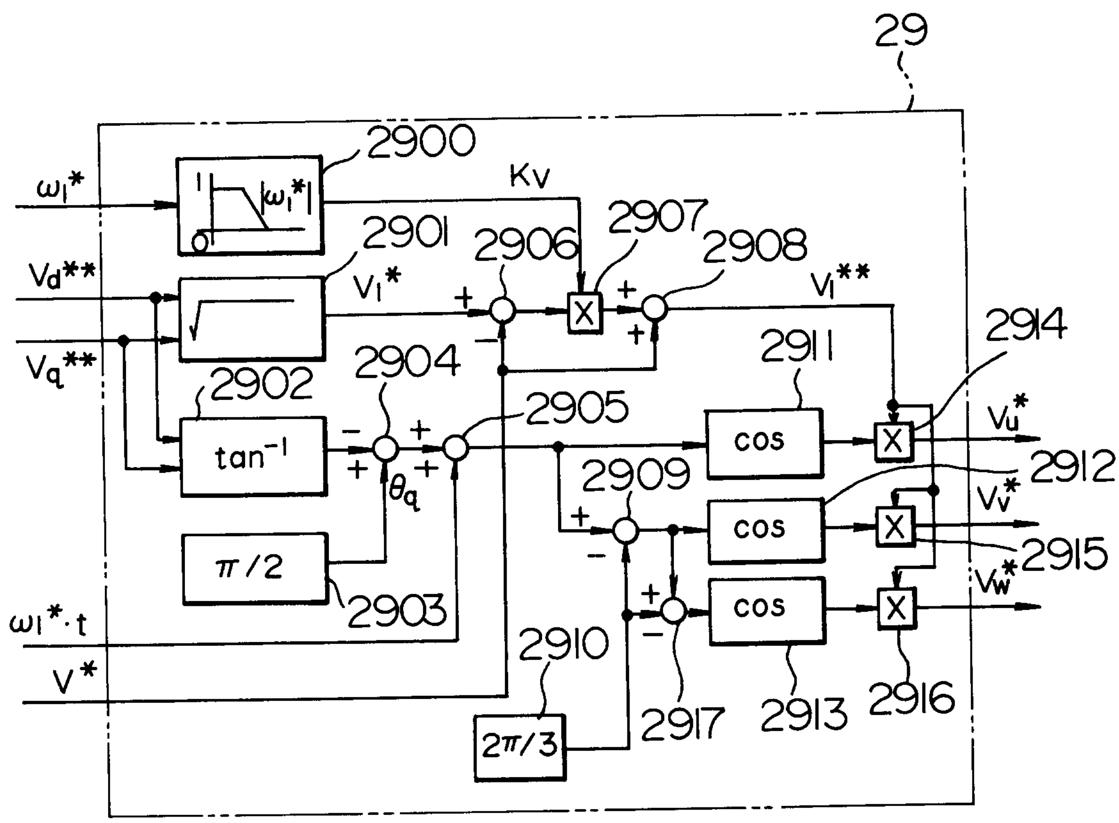
29
2900
Kv
ω1*
|ω1*|
2901
2906
2907
2908
Vd**
V1*
V1**
Vq**
2902
2904
2905
2911
2914
tan⁻¹
θq
cos
Vu*
2909
2912
Vv*
π/2
2915
2903
Vw*
ω1*·t
2910
V*
2π/3
2917
2913
2916

FIG. 19

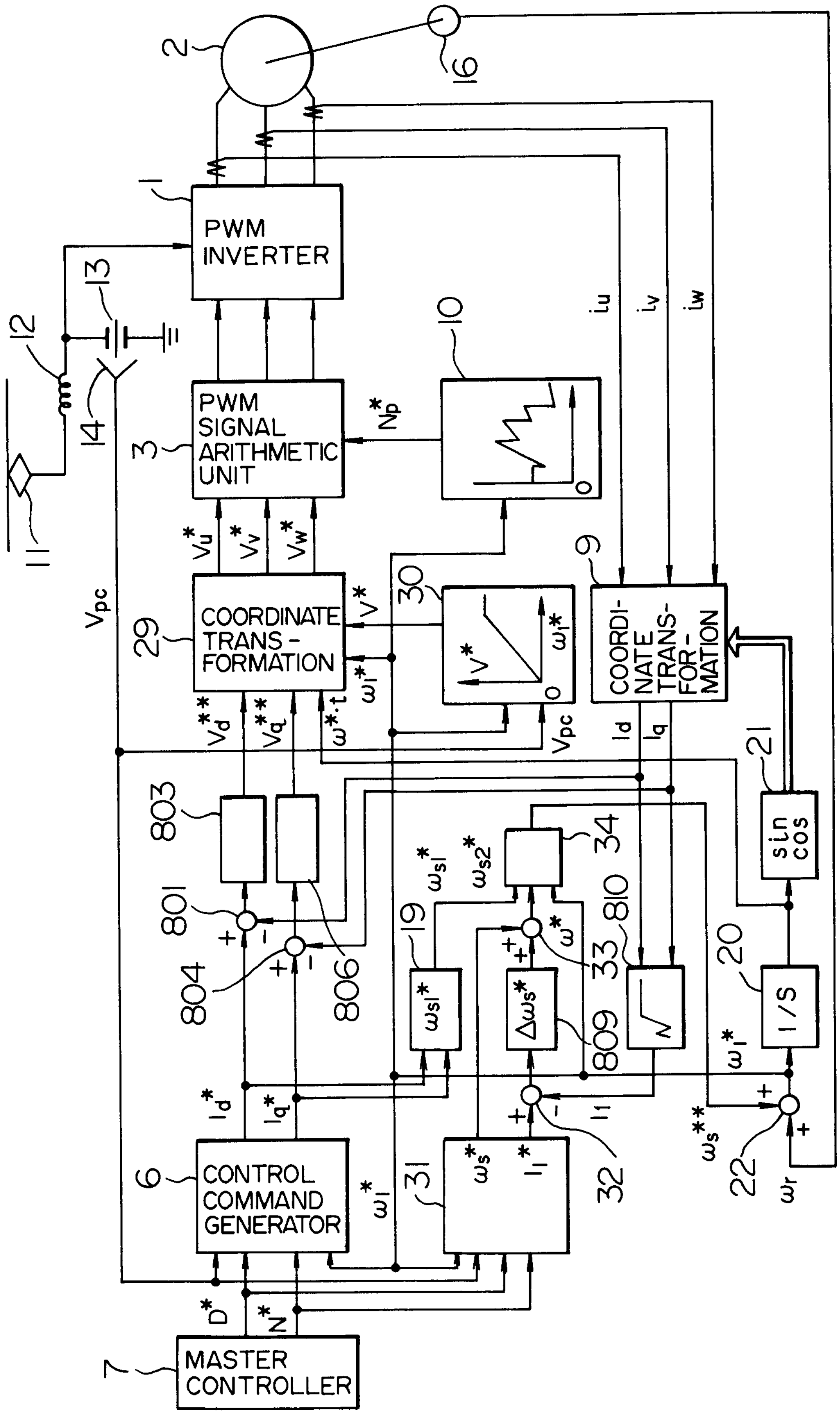
PWM INVERTER
PWM SIGNAL ARITHMETIC UNIT
COORDINATE TRANS-FORMATION
COORDI-NATE TRANS-FOR-MATION
sin cos
1/S
CONTROL COMMAND GENERATOR
MASTER CONTROLLER

FIG. 20

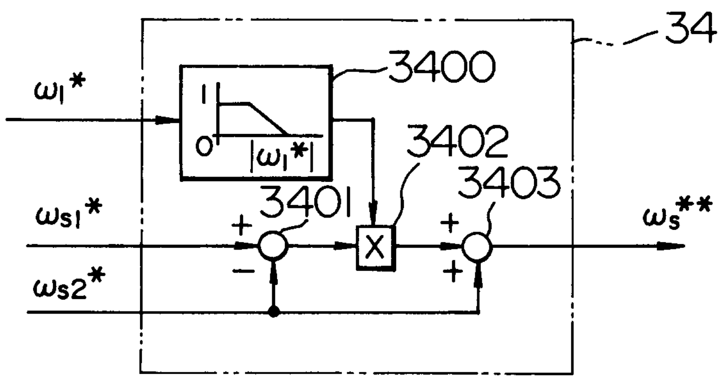
34
3400
3402
3401
3403
ω1*
ωs1*
ωs2*
ωs**
|ω1*|
1
0
X
+
−
+
+

FIG. 21

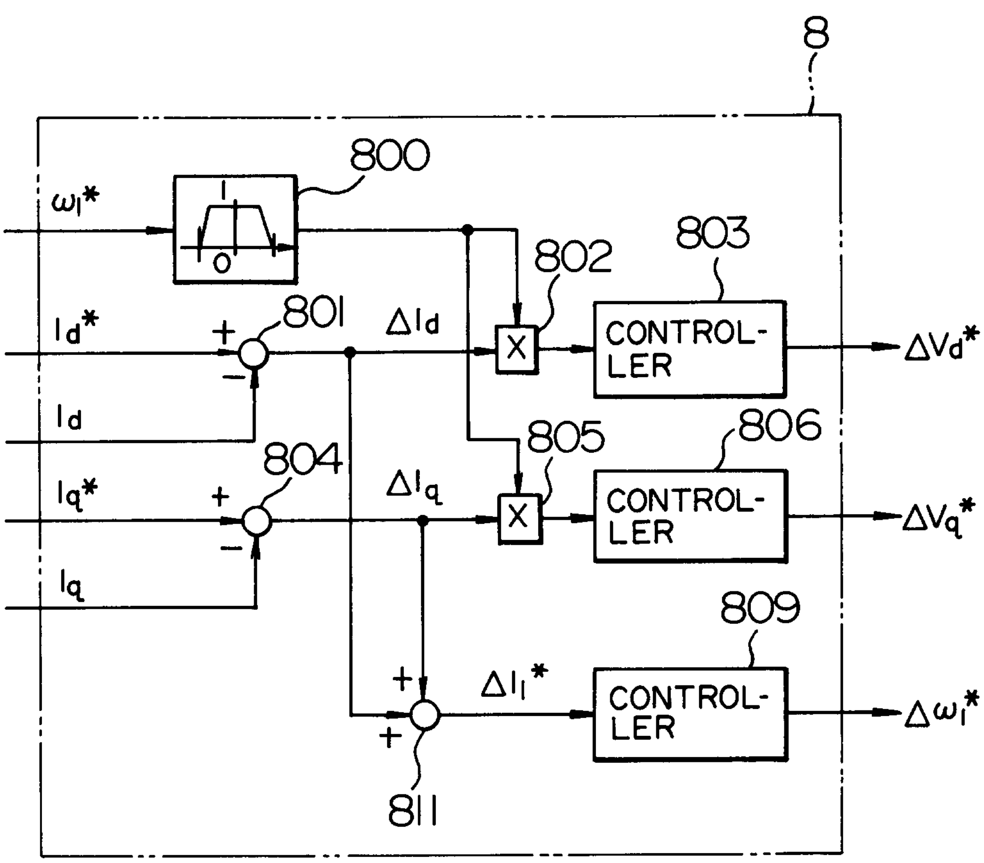
8
800
801
802
803
804
805
806
809
811
ω1*
Id*
Id
Iq*
Iq
ΔId
ΔIq
ΔI1*
CONTROL-
LER
CONTROL-
LER
CONTROL-
LER
ΔVd*
ΔVq*
Δω1*
X
X

FIG. 22

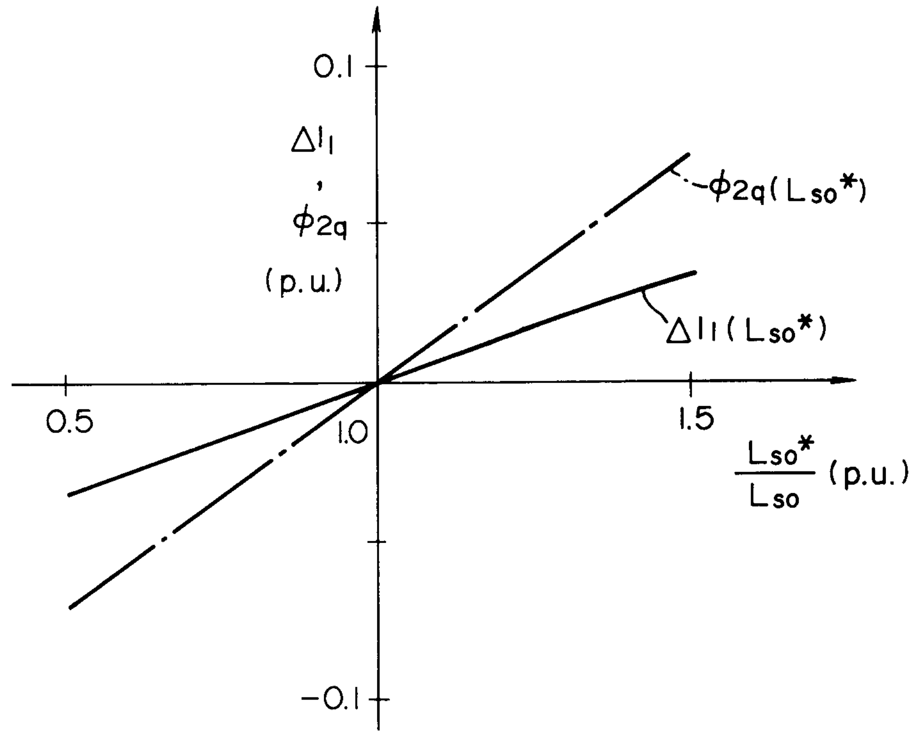
0.1
ΔI1
,
φ2q
(p.u.)
φ2q(Lso*)
ΔI1(Lso*)
0.5
1.0
1.5
Lso*/Lso (p.u.)
−0.1

FIG. 23

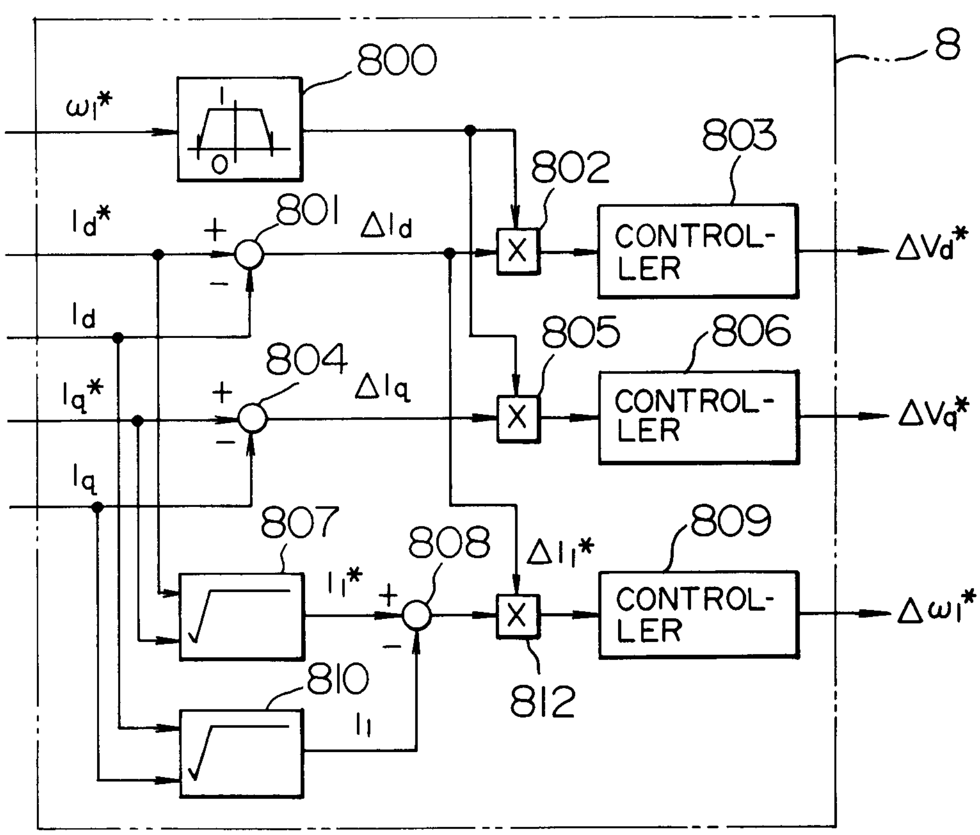
8
800
ω1*
1
0
803
802
Id*
801
ΔId
CONTROL-LER
ΔVd*
Id
805
806
Iq*
804
ΔIq
CONTROL-LER
ΔVq*
Iq
807
808
ΔI1*
809
I1*
CONTROL-LER
Δω1*
810
I1
812